(19) Europäisches Patentamt
European Patent Office
Office européen des brevets

(11) **EP 4 451 607 A1**

(12) **EUROPEAN PATENT APPLICATION**

(43) Date of publication:
**23.10.2024 Bulletin 2024/43**

(21) Application number: 23315083.8

(22) Date of filing: **19.04.2023**

(51) International Patent Classification (IPC):
**H04L 9/30** *(2006.01)*      **H04L 9/00** *(2022.01)*

(52) Cooperative Patent Classification (CPC):
**H04L 9/3093; H04L 9/008**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Zama SAS**
**75002 Paris (FR)**

(72) Inventor: **Joye, Marc**
**83640 Saint Zacharie (FR)**

(74) Representative: **DeltaPatents B.V.**
**Fellenoord 370**
**5611 ZL Eindhoven (NL)**

(54) **PUBLIC KEY ENCRYPTION WITH LWE-TYPE CIPHERTEXTS**

(57) Some embodiments are directed to generating a public key and/or to encrypting a message (m) with the public key. Generating the public key may include computing a vector in the public key which includes applying a bivariate, vector-valued function ($A \circledast s$) to a random vector and a private key. Encrypting a message may include computing a vector ($a$) including applying the bivariate vector-valued function to a vector in the public key and a random vector, and computing a scalar ($b$). The resulting ciphertext may be of LWE-type. Noise may be added for security

Fig. 2a

EP 4 451 607 A1

## Description

### TECHNICAL FIELD

The presently disclosed subject matter relates to a method for encrypting a message with a public key, a method for decrypting with a private key a message encrypted with a public key, a system, and a non-transitory computer storage medium.

### BACKGROUND

Homomorphic cryptography allows one to execute computer programs, e.g., circuit evaluations, function evaluations, etc., over encrypted data by a party without that party being able to decrypt. For example, input data and computation results may be received and returned in encrypted form. Intermediate data, e.g., an internal state of the computation, may also be in encrypted form. Even though the output of the computer program is returned in an encrypted form, when decrypted the output is expected to be the same, or very close to, as if the operations had been performed on the unencrypted data. Homomorphic encryption can be used for privacy-preserving outsourced storage and computation. This allows data to be encrypted and outsourced to a cloud environment for processing and/or storage, all while encrypted. In particular, homomorphic cryptography techniques exist that can be used, at least in principle, to compute any function on encrypted data. Such techniques are referred to as "fully homomorphic encryption" (FHE) techniques.

The execution environment is provided by various homomorphic encryption techniques. One such homomorphic encryption system is described in I. Chillotti et al., "Programmable bootstrapping enables efficient homomorphic inference of deep neural networks", Cyber Security Cryptography and Machine Learning (CSCML 2021), vol. 12716 of Lecture Notes in Computer Science, pp. 1-19, Springer, 2021, DOI: 10.1007/978-3-030-78086-9_1 (incorporated herein by reference). Generally, TFHE-like homomorphic encryption schemes can be based on lattice encryption, e.g., LWE or NTRU encryption.

For example, encrypted data may be received as LWE-type ciphertexts. Using technologies as described in the above paper, computations can be performed on an LWE-type ciphertext even though the secret key is unknown to the homomorphic computing device.

Accordingly, there is a need for systems that can encrypt a message scalar as an LWE-type ciphertext. In particular, there is a need for encrypting a plaintext message as an LWE-type ciphertext in a public/private key setting where only the decryption needs to be private. There is a desire to enable a party to compute encryptions, without also trusting that party with the secret key $s$.

### SUMMARY

It would be advantageous to have an improved way of publicly obtaining LWE-type encrypted data. Knowledge of the secret key $s$ would allow one to decrypt data using a regular LWE-type decryption algorithm. In an embodiment, a public key is generated from the secret key $s$, so that knowledge of the public key of the public/private key pair is enough to encrypt data as an LWE-type ciphertext, but is not enough to allow decryption of the data. In an embodiment, the private key of the public/private key pair may be a secret vector $s$.

An LWE-type ciphertext has the form ($a$, $b$) wherein $a$ is random vector, and b is a scalar. The LWE-type ciphertext encrypts a message scalar m for a secret vector $s$, wherein $b = \langle a, s \rangle + \tilde{m} + e$, message m is encoded as $\tilde{m}$, $e$ is a noise term, and $\langle a, s \rangle$ is the inner product. For example, the encoding $\tilde{m}$ may be $\Delta m$, wherein $\Delta$ represents a multiplier. The error term is added for security reasons.

A public key encryption according to an embodiment has advantages over conventional public key encryptions for LWE-type ciphertexts; see e.g. [6, Section 6.1] or [12]. For example, the public key is shorter than by about a factor of the size the ciphertext modulus, for example a factor of 64 for a 64-bit ciphertext modulus. Furthermore, noise in the resulting public-key ciphertexts can be well controlled; in particular, the noise level in a ciphertext is lower than in known public-key solutions, e.g., by 2 bits or more for typical parameters.

The public/private key pair may be used in any system in which public key encryption is used. For example, in a communication system, a sending device may encrypt a communication, e.g., an email, using the public key, while a receiving device may decrypt the encrypted communication with the private key. The security of the public key encryption is based on a computational hardness assumption, in this case, for example, the standard RLWE assumption. As for the LWE assumption, the RLWE assumption is lattice based; this is advantageous as the RLWE hardness is more likely to hold against adversaries with quantum computing capabilities, than say, the RSA assumption.

Interestingly, LWE-type encryption is particularly useful if the encrypted data is used in a homomorphic calculation system. For example, the homomorphic scheme referred to in the background may be used, though it should be noted that LWE-type encryption is used by other schemes than the one mentioned in the background. Embodiments are useful for such systems as well. Because in an embodiment the noise level is well controlled, the subsequent homomorphic calculation needs to make fewer allowances for the presence of noise, e.g., performs fewer bootstrapping operations. As bootstrapping operations are one of the bottlenecks in homomorphic operations, this is an advantage.

In an embodiment, a public key is paired with a secret key $s$. The secret key $s$ may be used as the private key. The private key may be generated as a random and bounded vector, e.g., a binary or ternary vector. The private key may also be received as an input. The public key comprises a pair of vectors that may be of the same dimension as the private key $s$. Accordingly, there is only an increase in the size of the public key —which is made of integers modulo $q$ (the ciphertext modulus)- compared to the private key but that increase is much lower than in conventional public keys for LWE-type encryption.

A first one of the vectors in the public may be randomly generated, while the second vector may be computed from the first vector and the private key vector $s$. Interestingly, a bivariate, vector valued function is applied that takes these two vectors as input and computes a vector. Many possibilities are possible for the function, and examples are provided herein.

Once the public key is computed, it can be used to encrypt a message. Typically, the public key will be used on a different device than the device that generated the public key. This is not necessary, for example, the public key may be used for process separation to increase security. In this way access to the private key can be restricted to parts of the device, e.g., high security parts. While access to public key can be allowed to a low security part.

The encryption of a plaintext scalar $m$ comprises a vector and a scalar, as in LWE-type encryption. Where encryption is performed using the private key instead of the public key, which is also possible, the vector part of the encryption may be randomly selected. The scalar part may then be computed from the vector part and the private key. However, in public key encryption, a random vector is generated from which both the vector part and the scalar part is computed, using the public key not the private key. For example, computing the vector part of the encryption uses the same bivariate, vector valued functions as used during public key generation.

Devices for public/private key generation, encryption, decryption and homomorphic encryption are electronic devices. The methods described herein may be applied in a wide range of practical applications. Examples include processing private data, e.g., medical data, financial data, etc., in a privacy-preserving way.

Some embodiments are directed to generating a public key and/or to encrypting a message ($m_1$) with the public key. Generating the public key may include computing a vector in the public key which includes applying a bivariate, vector-valued function ($A \circledast s$) to a random vector and a private key. Encrypting a message may include computing a vector ($a$) including applying the bivariate vector-valued function to a vector in the public key and a random vector. The resulting ciphertext may be of LWE-type. A further aspect is method of key generation, encryption and/or decryption. An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading. This aspect is used when the computer program is uploaded into, e.g., Apple's App Store, Google's Play Store, or Microsoft's Windows Store, and when the computer program is available for downloading from such a store.

## BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,

Figure 1a schematically shows an example of an embodiment of cryptographic system,
Figure 1b schematically shows an example of an embodiment of cryptographic system,
Figure 1c schematically shows an example of an embodiment of cryptographic system,
Figure 2a schematically shows an example of an embodiment of a key pair generation system,
Figure 2b schematically shows an example of an embodiment of a public key generation system,
Figure 3a schematically shows an example of an embodiment of an encryption system,
Figure 3b schematically shows an example of an embodiment of an encryption system,

Figure 4a schematically shows an example of an embodiment of a decryption system,
Figure 4b schematically shows an example of an embodiment of a decryption system,
Figure 5a schematically shows an example of an embodiment of an encryption method,
Figure 5b schematically shows an example of an embodiment of a key generation method,
Figure 5c schematically shows an example of an embodiment of a decryption method,
Figure 6a schematically shows a computer readable medium having a writable part comprising a computer program according to an embodiment,
Figure 6b schematically shows a representation of a processor system according to an embodiment.

Reference signs list

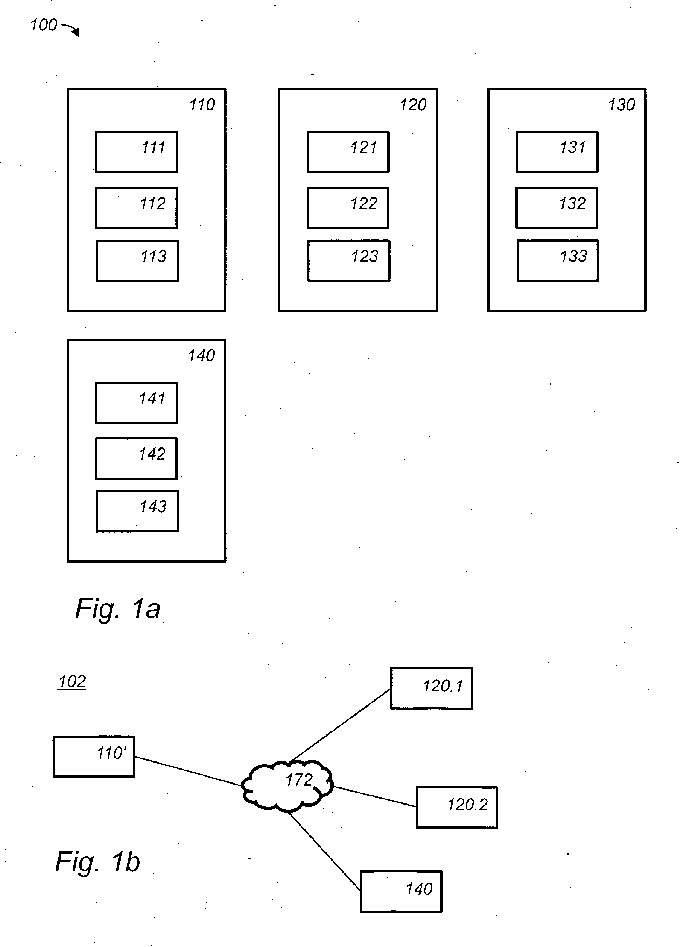

The following list of references and abbreviations corresponds to figures 1a-4b, and is provided for facilitating the interpretation of the drawings and shall not be construed as limiting the claims.

| 100, 102 | a cryptographic system |
| 110 | a public/private key pair generation device |
| 110' | a combined key pair generation and encryption device |
| 120, 120.1, 120.2 | an encryption device |
| 130 | a decryption device |
| 140 | a homomorphic calculation device |
| 111, 121, 131, 141 | a processor system |
| 112, 122, 132, 142 | storage |
| 113, 123, 133, 143 | communication interface |
| 172 | a computer network |
| 210 | a public/private key pair generation system |
| 210' | a public key generation system |
| 211 | a private key generator |
| 221 | a private key |
| 212 | a public key generator |
| 280 | a public key |
| 281 | a public key first vector |
| 282 | a public key second vector |
| 212.1 | a first vector generator |
| 212.2 | a second vector generator |

| 220, 220' | an encryption system |
| 213 | an encryptor |
| 213.1 | an encryptor vector generator |
| 213.2 | an inner product generator |
| 213.3 | an encryptor scalar generator |
| 251 | a random vector |
| 241 | a message |
| 260 | a public-key encrypted message (public-key ciphertext) |
| 261 | a vector component of a public-key encrypted message |
| 262 | a scalar component of a public-key encrypted message |

| 230, 230' | a decryption system |
| 214 | a decryptor |
| 214.1 | an inner product generator |
| 271 | an inner product |
| 214.2 | a subtraction and rounding/decoding unit |

| 510 | an encryption method . |
| 511 | obtaining a public key |
| 512 | obtaining a scalar |
| 513 | computing the public key encrypted message |
| 514 | generating a bounded, random vector |
| 515 | computing the vector |

| | |
|---|---|
| 516 | computing the scalar |
| 520 | a key generation method |
| 521 | generating a private key |
| 522 | randomly generating a first vector |
| 523 | computing a second vector |
| 530 | a decryption method |
| 531 | receiving an encrypted message encrypted with a public key |
| 532 | obtaining a private key |
| 533 | obtaining the plaintext message |

| | |
|---|---|
| 1000, 1001 | a computer readable medium |
| 1010 | a writable part |
| 1020 | a computer program |
| 1110 | integrated circuit(s) |
| 1120 | a processing unit |
| 1122 | a memory |
| 1124 | a dedicated integrated circuit |
| 1126 | a communication element |
| 1130 | an interconnect |
| 1140 | a processor system |

## DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

TFHE and its variants (e.g., [4, 3]) are natively private-key encryption schemes. The same key is used to encrypt or to decrypt messages. Certain private-key homomorphic encryption schemes can be turned into a public-key encryption scheme by providing encryptions of zero (e.g., [6, Section 6.1]).

A public-key encryption scheme may be obtained as follows. If $[[\cdot]]_{sk}$ denotes a probabilistic [private-key] encryption algorithm, a public encryption key may comprise z encryptions of 0; e.g., $pk = (a_1 \leftarrow [[0]]_{sk}, ..., a_z \leftarrow [[0]]_{sk})$. Let $\boxplus$ denote the ciphertext addition. A public-key encryption of a plaintext $m$ then may proceed as follows:

- Draw a random bit-string $(r_1, ..., r_z) \overset{\$}{\leftarrow} \{0,1\}^z$ ;
- Compute a randomized encryption of zero as

$$S \leftarrow r_1 \, a_1 \boxplus r_2 \, a_2 \boxplus \cdots \boxplus r_z \, a_z;$$

;
- Compute a trivial encryption of $m$ and get $M \leftarrow [[m]]_{sk}$;
- Output the ciphertext

$$C \leftarrow S \boxplus M.$$

A so-called trivial encryption is an encryption that can be obtained without the knowledge of the private key. Such an encryption is insecure. The so-obtained ciphertext decrypts to the input plaintext.

Noting that $C = [[m]]_{sk}$, the ciphertext $C$ can be decrypted using the private key sk.

In the case of TFHE-like encryption, the private decryption key is an $n$-bit string $\boldsymbol{s} = (s_1, ... , s_n)$. The matching public encryption key is'

$$\{(\boldsymbol{a}_i, b_i) \in (\mathbb{Z}/q\mathbb{Z})^n \times \mathbb{Z}/q\mathbb{Z}\}_{1 \le i \le z}$$

$$\begin{cases} \boldsymbol{a}_i \stackrel{\$}{\leftarrow} (\mathbb{Z}/q\mathbb{Z})^n \\ b_i \leftarrow e_i + \sum_{j=1}^{n} (\boldsymbol{a}_i)_j \, s_j \pmod{q} \end{cases}$$

where and $(\boldsymbol{a}_i)_j$ denotes the $j$-th component of vector $\boldsymbol{a}_i$. The encryption of a plaintext $m \in \mathbb{Z}/t\mathbb{Z}$ is given by $\boldsymbol{c} = (\boldsymbol{a}, b) \in (\mathbb{Z}/q\mathbb{Z})^{n+1}$ with mask $\boldsymbol{a} = \sum_{i=1}^{z} r_i \, \boldsymbol{a}_i$ and body $b = \sum_{i=1}^{z} r_i \, b_i + \Delta \, m$ where $\Delta = q/t$. This assumes that $t$ divides $q$. If not, an option is for example to define $\Delta = \lfloor q/t \rfloor$ (flooring), $\Delta = \lceil q/t \rceil$ (ceiling), or $\Delta = \lceil q/t \rfloor$ (rounding).

Another option is for example to define $\tilde{m} = \lfloor m \, q/t \rfloor$ (flooring), $\tilde{m} = \lceil m \, q/t \rceil$ (ceiling), or $\tilde{m} = \lceil m \, q/t \rfloor$ (rounding). The body $b$ of the ciphertext is then defined as $b = \sum_{i=1}^{z} r_i \, b_i + \tilde{m}$.

Using matrix notation with vectors as column matrices, if we view the public key as the pair pk = $(\mathbf{A}, b)$ with

$$\mathbf{A} = \begin{pmatrix} (\boldsymbol{a}_1)_1 & \cdots & (\boldsymbol{a}_z)_1 \\ \vdots & & \vdots \\ (\boldsymbol{a}_1)_n & \cdots & (\boldsymbol{a}_z)_n \end{pmatrix} \in (\mathbb{Z}/q\mathbb{Z})^{n \times z} \quad \text{and} \quad \boldsymbol{b} = \begin{pmatrix} b_1 \\ \vdots \\ b_z \end{pmatrix} \in (\mathbb{Z}/q\mathbb{Z})^z$$

where $\boldsymbol{b} = \mathbf{A}^\tau \, \boldsymbol{s} + \boldsymbol{e}$, then ciphertext $\boldsymbol{c}$ can be expressed as $\boldsymbol{c} = (\boldsymbol{a}, b)$ with $\boldsymbol{a} = \mathbf{A}\boldsymbol{r}$ and $b = \boldsymbol{b}^\tau \, \boldsymbol{r} + \Delta \, m$ (resp. $b = \boldsymbol{b}^\tau \, \boldsymbol{r} + \tilde{m}$) where $\boldsymbol{r} = (r_1 \quad \cdots \quad r_z)^\top \in (\mathbb{Z}/q\mathbb{Z})^z$.

The decryption of a ciphertext $\boldsymbol{c} = (a_1, \ldots, a_n, b) \in (\mathbb{Z}/q\mathbb{Z})^{n+1}$ may proceed in two steps. The first step is to recover the corresponding phase defined as

$$\phi_s(\boldsymbol{c}) = b - \sum_{j=1}^{n} a_j \, s_j \bmod q$$

which represents a noisy value of plaintext m. Indeed, it turns out from the definition that $\phi_s(\boldsymbol{c}) = \Delta m + \mathrm{Err}(\boldsymbol{c})$ (resp. $\phi_s(\boldsymbol{c}) = \tilde{m} + \mathrm{Err}(\boldsymbol{c})$); $\mathrm{Err}(\boldsymbol{c})$ denotes the noise (error) term present in c . The second step is to remove the noise $\mathrm{Err}(\boldsymbol{c})$ to get $\Delta$m (resp. $\tilde{m}$) and, in turn, $m$.

The above description makes use of the ring $\mathbb{Z}/q\mathbb{Z}$. TFHE and the likes can similarly be defined over the discretized torus $\mathbb{T}_q = \frac{1}{q}\mathbb{Z}/\mathbb{Z}$; see [8]. It also applies to polynomial structures; see e.g. [5]. More generally, it applies to algebraic structures known as modules.

Let R be a ring. An R-module T equipped with an external product '·' satisfies the following properties. For any $k, l \in R$ and $a, b \in T$, it holds that $(k + l) \cdot a = k \cdot a + l \cdot a$ and $k \cdot (a + b) = k \cdot a + k \cdot b$. Further, the external product is homogeneous: for any $k, l \in R$ and $t \in T$, one has $k \cdot (l \cdot t) = (kl) \cdot t$. For example, the real torus $\mathbb{T} = \mathbb{R}/\mathbb{Z}$ is a $\mathbb{Z}$-module. Take $k = 2, l = 3$, $a = \frac{2}{5}$ and $b = \frac{4}{5}$. One gets $(k + l) \cdot a = 5 \cdot \frac{2}{5} = 0$ and $k \cdot a + l \cdot a = \frac{4}{5} + \frac{1}{5} = 0$, as expected. One also get $k \cdot (\alpha + b) = 2 \cdot \frac{1}{5} = \frac{2}{5}$ and $k \cdot a + k \cdot b = \frac{4}{5} + \frac{3}{5} = \frac{2}{5}$. Finally, taking $t = a = \frac{2}{5}$, one gets $k \cdot (l \cdot t) = 2 \cdot \frac{1}{5} = \frac{2}{5}$ and $(kl) \cdot t = 6 \cdot \frac{2}{5} = \frac{2}{5}$, as expected.

Modules are defined from any rings, including polynomial rings. For example, let $\Phi(X)$ denote the $M$-th cyclotomic polynomial, e.g., the unique irreducible polynomial with integer coefficients that divides $X^M - 1$ but not $X^k - 1$ for any $k < M$, and let $n$ denote its degree. Suppose for example that $M$ is chosen as a power of 2, in which case we have $n = M/2$ and $\Phi(X) = X^n + 1$. Considering the polynomial rings $\mathbb{R}_n[X] := \mathbb{R}[X]/(X^n + 1)$ and $\mathbb{Z}_n[X] := \mathbb{Z}[X]/(X^n + 1)$, this

defines the $\mathbb{Z}_n[X]$-module

$$\mathbb{T}_n[X] := \mathbb{R}_n[X]/\mathbb{Z}_n[X] = \mathbb{T}[X]/(X^n + 1).$$

Elements of $\mathbb{T}_n[X]$ can therefore be seen as polynomials modulo $X^n + 1$ with coefficients in 'B'. Being a $\mathbb{Z}_n[X]$-module, elements in $\mathbb{T}_n[X]$ can be added together and externally multiplied by polynomials of $\mathbb{Z}_n[X]$. Here is an illustration. If $M = 4$ (and so $n = 2$) then $\Phi(X) = X^2 + 1$ and, in turn, $\mathbb{T}_2[X] = \mathbb{T}[X]/(X^2 + 1) = \{\mathfrak{p}(X) = p_1 X + p_0 \mid p_0, p_1 \in \mathbb{T}\}$. Take for example $\mathfrak{p}(X) = \frac{2}{5}X + \frac{1}{3}$, $\mathfrak{q}(X) = \frac{4}{5}X + \frac{1}{2}$, and r(X) = 2X + 7. Then $(\mathfrak{p} + \mathfrak{q})(X) = \frac{1}{5}X + \frac{5}{6}$ and $(\mathfrak{r} \cdot \mathfrak{p})(X) = \frac{4}{5}X^2 + \frac{7}{15}X + \frac{1}{3} = -\frac{4}{5} + \frac{7}{15}X + \frac{1}{3} = \frac{7}{15}X + \frac{8}{15}$.

Recall that polynomials are defined modulo $X^2 + 1$ (and thus $X^2 = -1$).

It is worth noting that a ring $R$ is also an $R$-module wherein the external product is simply the (internal) product of $R$.

In order to have a sufficient security margin, the value of $z$ should be at least of the order of

$$z = (n + 1)\,|q|_2 + \kappa \; ;$$

the additional term $\kappa$, where $\kappa$ is the security parameter accounts for the corresponding subset-sum problems. For example, typically, $\kappa = 128$.

For a random variable $X$, its expectation is denoted by $\mathbb{E}[X]$ and its variance by Var($X$). Assuming that the noise $e_i$ is centered and that its variance is bounded by the same threshold $\sigma^2 = \mathrm{Var}(e_i)$, the noise variance in an output ciphertext-where $r \xleftarrow{\$} \{0,1\}^z$—is of $\frac{1}{2}z\,\sigma^2$. In the worst case, $r = (1,1, ...,1)$ and Var(Err($c$)) = $z\,\sigma^2$.

Indeed, let c denote the output ciphertext. It is easy to check that $\phi_s(c) = \sum_{i=1}^z r_i\,e_i + \Delta m$ and thus $\mathrm{Err}(c) = \sum_{i=1}^z r_i\,e_i$. Noting that for a uniform bit $b$ in $\{0,1\}$, $\mathbb{E}[b] = 1/2$ and Var($b$) = 1/4, it follows that

$$\mathrm{Var}(\mathrm{Err}(c)) = \sum_{i=1}^z \mathrm{Var}(r_i\,e_i) = \sum_{i=1}^z \left(\frac{1}{4}\,\sigma^2 + \frac{1}{4}\,0 + \sigma^2\left(\frac{1}{2}\right)^2\right) = z\,\frac{1}{2}\,\sigma^2$$

. If $r = (1,1, ...,1)$ then

$$\mathrm{Var}(\mathrm{Err}(c)) = \sum_{i=1}^z \mathrm{Var}(e_i) = z\,\sigma^2$$

Further, assuming the masks $a_i$ are derived from a random seed $\vartheta \in \{0,1\}^\kappa$ where $\kappa$ is the security parameter, the size of the public encryption key is of $|\vartheta|_2 + ((n + 1)|q|_2 + \kappa)\,|q|_2$ bits.

For example, at the 128-bit security level, e.g., $\kappa = 128$, with $n = 1024$, $q = 2^{64}$ and $\sigma = 2^{-25}q = 2^{39}$, we have $z = 65728 \approx 2^{16}$. This results in an increase of the noise variance in an output ciphertext by an expected factor of $2^{15}$. With $\sigma = 2^{39}$, the standard deviation of the noise in an output ciphertext is of $2^{46.5}$. We also have that the public encryption key takes 4206720 bits, that is, about 526 kB.

While the above approach is capable of forming LWE-type ciphertexts, it suffers from several disadvantages. The public encryption key has a large size. Furthermore, the resulting LWE-type ciphertexts contain a larger amount of noise. This may be particularly an issue for fully homomorphic encryption, where operations are directly performed on ciphertexts. Embodiments described herein reduce the public encryption key size for a given security level, or increase security for a given public encryption key size. Embodiments described herein reduce noise in an LWE-type ciphertext.

**Figure 1a** schematically shows an example of an embodiment of a key pair generation device 110, an embodiment of an encryption device 120, an embodiment of a decryption device 130, and an embodiment of homomorphic calculation device 140.

Key pair generation device 110, encryption device 120, decryption device 130, and homomorphic calculation device 140 may be part of a system 100.

Key pair generation device 110 is configured to generate a public/private key pair. The private key of the key pair may be generated as a bounded, random vector ($s$). The public key may comprise two vectors, that are computed from the private key and further inputs, e.g., random inputs.

Encryption device 120 is configured to encrypt a plaintext message using a public key, e.g., as generated by the key pair generation device 110. Note encryption does not need access to the private key. The encryption may comprise a vector and a scalar. The vector and scalar being computed from the public key, the plaintext message, and further random inputs, in particular a random vector. The random vector and other random inputs may be computed by the encryption device 120.

Decryption device 130 is configured to decrypt an encrypted message, e.g., an encryption of the plaintext message, performed by encryption device 120. Decryption uses the private key, e.g., computed by the key pair generation device.

Key pair generation device 110 and decryption device 130 are typically the same device. For example, key pair generation device 110 may generate a key pair, retain the private key and send the public to encryption device 120. It is not necessary that key pair generation 110 and decryption device 130 are the same device. For example, key pair generation device 110 may be trusted to compute key pairs. Key pair generation device 110 may send the public key to encryption device 120 and the private key to decryption device 130.

Key pair generation device 110, encryption device 120, decryption device 130, form a cryptographic system 100. For example, any device 120 with access to the public key may encrypt messages which can only be decrypted with access to the private key, e.g., by decryption device 130. Multiple devices 120 may use the same public key to encrypt messages for decryption device 130. In a communication system, devices 120 typically do not have access to the private key; for some applications this may be done however, e.g., see below.

An optional, but advantageous addition to cryptographic system 100 is homomorphic calculation device 140. Calculation device 140 is configured to perform homomorphic calculations on encrypted messages. For example, one or more encryption devices 120 encrypt data, e.g., numerical data, using the same public key, and send the resulting encrypted messages to calculation device 140. Calculation device 140 performs a calculation, e.g., an algorithm, e.g., evaluates a neural network on the encrypted data. Note that calculation device 140 is not provided with the private key, though it may receive the public key. It may also be provided with so-called public evaluation keys; including bootstrapping keys or key-switching keys. Such auxiliary key material may be used by calculation device 140 to perform its computations. However, the auxiliary key material does not allow calculation device 140 to decrypt ciphertexts, nor to create ciphertexts. That is, the auxiliary key material is neither a private decryption key, nor a public encryption key.

The outcome of the calculation may be provided to decryption device 130, and may be decrypted there.

For example, calculation device 140 may be configured to receive an encrypted message; the encrypted message being previously obtained by encrypting a plaintext message with a public key according to an encryption method as in an embodiment. Calculation device 140 may also receive the public key that was used to encrypt the data as well as evaluation keys.

Calculation device 140 can then perform a homomorphic calculation upon the encrypted input data, obtaining a public key encrypted output data. The output data can be supplied, e.g., to decryption device 130. The calculations may use a system such as described in the background.

For example, in a cryptographic system 100, devices 110 and 130 may be the same device, but devices 130 and 140 are not. For example, in a cryptographic system 100, devices 110, 120 and 130 may be the same device, but device 140 is not. In the latter example, the encrypting device has access to the private key, the calculation device however does not get access to the private key.

Key pair generation device 110 may comprise a processor system 111, a storage 112, and a communication interface 113. Encryption device 120 may comprise a processor system 121, a storage 122, and a communication interface 123. Decryption device 130 may comprise a processor system 131, a storage 132, and a communication interface 133. Homomorphic calculation device 140 may comprise a processor system 141, a storage 142, and a communication interface 143.

In the various embodiments of communication interfaces 113, 123, 133, and/or 143, the communication interfaces may be selected from various alternatives. For example, the interface may be a network interface to a local or wide area network, e.g., the Internet, a storage interface to an internal or external data storage, an application interface (API), etc.

Storage 112, 122, 132, and 142 may be, e.g., electronic storage, magnetic storage, etc. The storage may comprise local storage, e.g., a local hard drive or electronic memory. Storage 112, 122, 132, and 142 may comprise non-local storage, e.g., cloud storage. In the latter case, storage 112, 122, 132, and 142 may comprise a storage interface to the non-local storage. Storage may comprise multiple discrete sub-storages together making up storage 112, 122, 132, and 142.

Storage 112, 122, 132, and 142 may be non-transitory storage. For example, storage 112, 122, 132, and 142 may store data in the presence of power such as a volatile memory device, e.g., a Random Access Memory (RAM). For example, storage 112, 122, 132, and 142 may store data in the presence of power as well as outside the presence of power such as a non-volalile memory device, e.g., Flash memory. Storage may comprise a volatile writable part, say a RAM, a non-volatile writable part, e.g., Flash, Storage may comprise a non-volatile non-writable part, e.g., ROM.

The devices 110, 120, 130, and 140 may communicate internally, with each other, with other devices, external storage, input devices, output devices, and/or one or more sensors over a computer network. The computer network may be an internet, an intranet, a LAN, a WLAN, etc. The computer network may be the Internet. The devices 110, 120, 130, and 140 comprise a connection interface which is arranged to communicate within cryptographic system 100 or outside of cryptographic system 100 as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The communication interface 113 may be used to send or receive digital data, e.g., sending a public key to an encryption device. The communication interface 123 may be used to send or receive digital data, e.g., receive a public key, send encrypted data. The communication interface 133 may be used to send or receive digital data, e.g., receive encrypted data. The communication interface 143 may be used to communicate with other encryption devices, e.g., receive encrypted input data, send encrypted output data.

The execution of devices 110, 120, 130, and 140 may be implemented in a processor system. The devices 110, 120, 130, and 140 may comprise functional units to implement aspects of embodiments. The functional units may be part of the processor system. For example, functional units shown herein may be wholly or partially implemented in computer instructions that are stored in a storage of the device and executable by the processor system.

The processor system may comprise one or more processor circuits, e.g., microprocessors, CPUs, GPUs, etc. Devices 110, 120, 130, and 140 may comprise multiple processors. A processor circuit may be implemented in a distributed fashion, e.g., as multiple sub-processor circuits. For example, devices 110, 120, 130, and 140 may use cloud computing.

Typically, the key pair generation device 110, encryption device 120, decryption device 130, and homomorphic calculation device 140, each comprise one or more microprocessors which executes appropriate software stored at the device; for example, that software may have been downloaded and/or stored in a corresponding memory, e.g., a volatile memory such as RAM or a non-volatile memory such as Flash.

Instead of using software to implement a function, the devices 110, 120, 130, and/or 140 may, in whole or in part, be implemented in programmable logic, e.g., as field-programmable gate array (FPGA). The devices may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, devices 110, 120, 130, and 140 may comprise circuits, e.g., for cryptographic processing, and/or arithmetic processing;

In hybrid embodiments, functional units are implemented partially in hardware, e.g., as coprocessors, e.g., cryptographic coprocessors, and partially in software stored and executed on the device.

**Figure 1b** schematically shows an example of an embodiment of a cryptographic system 102. System 102 may comprise multiple encryption devices; shown are encryption devices 120.1 and 120.2. System 102 comprises a combined key pair generation device and decryption device 110'.

The devices are connected through a computer network 172, e.g., the Internet.

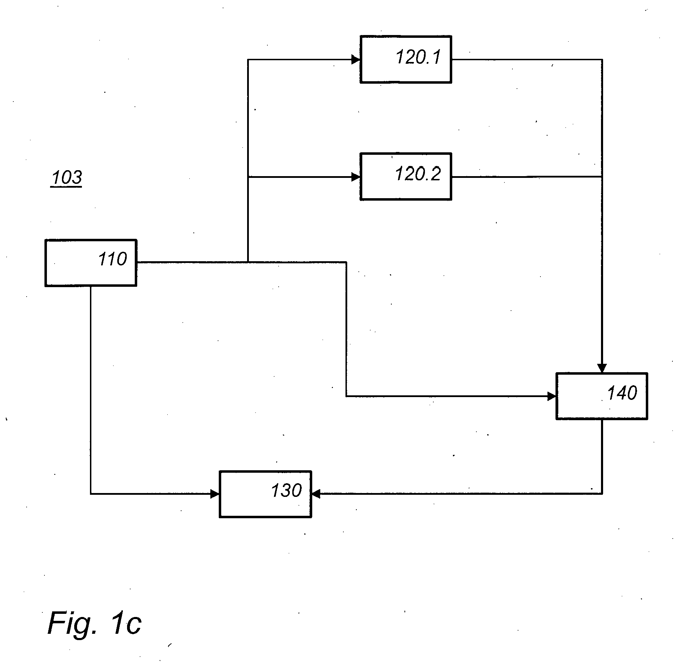

**Figure 1c** schematically shows an example of an embodiment of a cryptographic system 103. System 103 may comprise multiple encryption devices; shown are encryption devices 120.1 and 120:2. System 103 comprises a public/private key pair generation device 110 and a decryption device 130; these may be combined in a single device. System 103 comprises a homomorphic calculation device 140

Key pair generation device generates a private key and sends it to decryption device 130. Note that the latter could be other way round; the decryption device generating a private key and sending it to device 110. Device 110 generates a corresponding public key and send it to the encryption devices 120.1, and 120.2. Typically, all encryption devices receive the public key, though multiple different yet functionally equivalent public keys could be computed for the same private key.

Encryption devices 120.1 and 120.2 use the public key to encrypt data and send the encrypted data to homomorphic calculation device 140

A device that knows the public key, e.g., key pair generation device 110 and possibly decryption device 130 could also encrypt data and send it to homomorphic calculation device 140. In figure 1c, device 110 sends encrypted data to device 140. Device 110 or 130 may also compute additional cryptographic data useful for homomorphic calculations, and send it to device 140. The additional cryptographic data does not allow decryption of the encrypted data.

. Calculation device 140 may send the encrypted data to the decryption device.

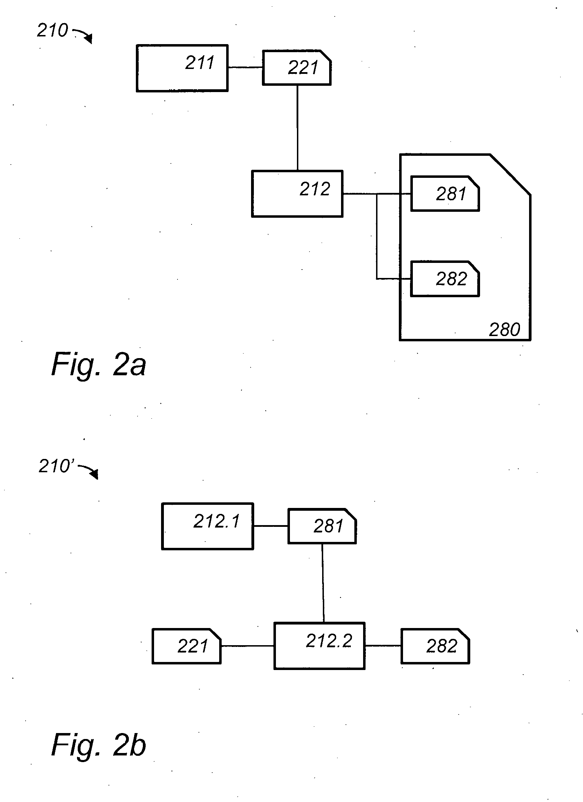

**Figure 2a** schematically shows an example of an embodiment of a key pair generation system 210. For example, generation system 210 could be implemented on key pair generation device 110.

System 210 may comprise a private key generator 211. The private key 221 comprises a bounded, random vector *s*. For example, the entries of the vector may be generated with a random number generator. The entries of the vector are bounded. For example, system 210 may store a bound, and may be configured to generate the entries up to the bound. The bound has an impact on the proliferation of noise in the system, so that a small bound is preferable for efficiency reasons. On the other hand, a larger bound allows for more randomness in the so-generated secret private key, which improves security. The bound may be chosen so that the system meets the targeted security level; e.g., typically 128-bit security. The entries are preferably balanced around zero, as this reduces noise proliferation.. For example, the absolute value of the entries in a bounded vector may be at most the bound, the bound being determined by the targeted security level and system parameters; for example, over the integers, may be, e.g., at most 5, at most 2, preferably, at most 1.

In an embodiment, system 210 receives a security parameter as an input. The other parameters, e.g., dimension of vectors and the like, may be derived from the security parameters. Instead, system 210 may store one or more sets of parameters, selected by a cryptographic professional, e.g., a low, medium, and high security set.

Instead of generating the private key, system 210 may obtain the key in another manner, e.g., receive the key. In that case the key pair generation system needs only to generate the public key corresponding to the private key. The private key generator 211 is optional.

For example, a lower and upper bound may be set within which the entries of the vector are chosen. Two typical choices for a bounded vector, such as the private key vector are a binary vector. In this case, the entries may be chosen between 0 and 1 inclusive. Another choice is a ternary vector. In this case, the entries may be chosen between -1 and 1 inclusive.

Having a private key 221, a public key 280 may be generated. Interestingly, knowledge of the public key 280 is sufficient to encrypt a message, while knowledge of the corresponding private key is needed to decrypt the encrypted message. In an embodiment the public key 280 comprises at least two vectors, at least one of which is randomly generated, and at least one of which is derived from at least the private key. In an embodiment, public key 280 comprises exactly two vectors of equal dimension.

In an embodiment, public key 280 comprises two vectors, e.g., a pair of vectors (**A**, **B**). Shown is first vector 281, **A**, and second vector 282, **B**. A public key generator 212 may be configured to generate public key 280 from the private key 221.

A first vector of the two vectors may be randomly generated. For example, the entries of the first vector may be generated by a random number generator. It is not needed for the first vector to be small, e.g., bounded. Instead, the elements of the first vectors may be freely chosen from the underlying domain defining the scheme; for example, the ring $\mathbb{Z}/q\mathbb{Z}$, the real torus $\mathbb{T}$ or the discretized torus $\mathbb{T}_q$. A second vector of the two vectors is derived from the randomly generated vector and private key 221.

**Figure 2b** schematically shows an example of an embodiment of a public key generator 210'. Generator 210' is an example embodiment of public key generator 212, and may be used in system 210.

Generator 210' comprises a first vector generator 212.1. First vector generator 212.1 may be similar to private key generator 211, except that no bound on the size of the entries of first vector 281 needs to be imposed. Generator 210' comprises a second vector generator 212.2. Second vector generator 212.2. computes second vector 282 from the first vector 281 and the private key vector 221.

To compute second vector 282, a bivariate, vector-valued function, denoted as Q is applied to the first vector 281 (**A**) and the private key 221 (**s**).. The result of the function **A** ⊛ **s** is perturbed by adding a noise component to the result. A typical way to do this is to generate a noise vector **e** and to add the noise vector to the result of the function application: **A** ⊛ **s** + **e**. For example, the noise vector may be generated similarly as the private key, e.g., as a random and bounded vector. The bound used for the noise vector does not have to be the same as the one used for the private key, though it may. For example, the noise vector may be a binary or ternary vector. For example, the noise vector can be drawn from a normal distribution centered around zero.

For the bivariate function various possibilities are possible. Especially if the function is allowed to be non-linear, there are many choices. There are various constructions possible to determine a suitable bivariate function. For example, choosing the bivariate function may be done by determining it subject to restrictions imposed upon the function. For example, a typical restriction on the bivariate function is that encrypting results in an LWE-type ciphertext that decrypts to the original message-the same bivariate function may be used in the encryption and decryption. If in addition the bivariate function is, say, required to be linear in both of its inputs, then a system of equations can be created that determine the function or at least significantly limit the remaining choices. Various constructions for the bivariate functions are described herein. For example, a more efficient construction is to adapt an existing convolution. In the latter construction far fewer parameters need to be determined.

It is possible to compute multiple different public keys corresponding to the same private key. The resulting ciphertexts resulting from using the different public keys are indistinguishable in the sense that one cannot tell, not even with the knowledge of the private key, which public key was used for the encryption.

The entries in the vectors, e.g., in the private key and public key, and also the vectors and scalars described below for encrypting are typically chosen from a finite algebraic structure. For example, the algebraic structure may be

the finite ring $\mathbb{Z}/q\mathbb{Z}$. For example, the algebraic structure may be the discretized torus $\mathbb{T}_q$. Note that q in these two examples is not required to be prime, though it may be; typically $q$ is taken as a power of two. The underlying algebraic structure can also be continuous; for example, the algebraic structure may be the real torus $\mathbb{T}$.

The dimension of the vector may be set according to the usage, for example, security requirements imposed on the system, the type of calculations that are performed on the encrypted data, if any, e.g., the expected noise proliferation, etc. Typically, the dimension of the vectors is a power of 2. For example, the dimension of the vectors may be at least 512, at least 1024, etc. Other values for the dimension, e.g., other than powers a power of 2, may be chosen. For example, the dimension may be selected as $\phi(M)$ where $\phi$ denotes Euler's totient function for some integer $M$. This for example corresponds to the case where quotient polynomial is chosen as a cyclotomic polynomial. The degree of the M-th cyclotomic polynomial is $\phi(M)$. Note also that when $M$ is a power of two so is $\phi(M)$.

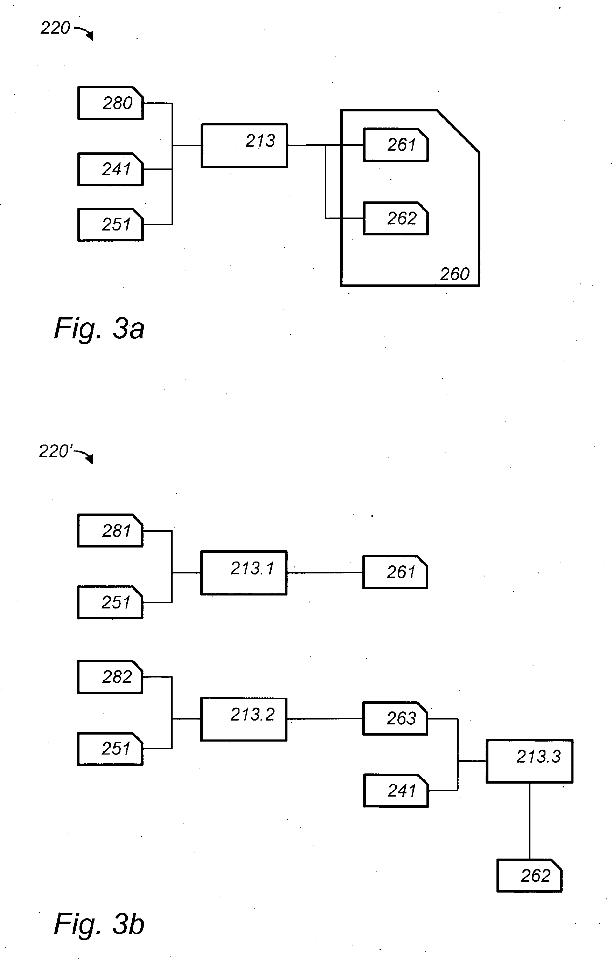

**Figure 3a** schematically shows an example of an embodiment of an encryption system 220.

Encryption system 220 may be implemented in a different system as the key generation system. For example, encryption system 220 may be used in a communication system, e.g., an email system. For example, encryption system 220 receives a public key 280, e.g., from system 210, and uses it to encrypt a message 241. The encrypted message 260 may be sent to a decryption system, which could be the same system as the key generation system 210, who can then decrypt the encrypted message 260 to recover the original message 241. In this embodiment, encryption system 220 typically has no access to the private key 221 corresponding to public key 280.

Encryption system 220 may be implemented to encrypt data for use in a subsequent homomorphic calculation system. In an embodiment, encryption system 220 may be implemented in the same system as key generation system 210, though this is not necessary. In such an embodiment, encryption system 220 may have access to the private key 221 corresponding to public key 280, though private key 221 is not needed for encryption.

Encryption system 220 obtains a public key 280. For example, public key 280 may be received from a key generation system 210. For example, public key 280 may be generated in system 220. For example, public key 280 and the corresponding private key 221 may be ephemeral keys. For example, a private/public key pair may be generated for the duration of one computation.

Encryption system 220 is configured to obtain a scalar ($m_1$) representing a plaintext message. The scalar may be selected from the underlying domain. For example, a function may map a plaintext message to the scalar. A plaintext message may be split over multiple scalars, to accommodate larger plaintext messages. The multiple scalars can be encrypted separately according to an embodiment. In an embodiment described below the multiple scalars can be encrypted jointly.

The public key encryption of message 241 comprises a vector (***a***) and a scalar (***b***). The scalar could be an entry in a vector, but typically, this is not the case. For example, each encrypted message scalar may have one corresponding vector and one corresponding scalar.

The plaintext could represent various types of data. Below is a list of examples for the plaintext message. These examples are especially suitable if the encryption is used to encrypt data before sending it to a homomorphic calculator, e.g., such as device 140. Encryption may be used, e.g., in one of the following scenarios:

Healthcare applications: patient data may be encrypted with an embodiment of system 220. Homomorphic calculation can be used to perform medical research on the encrypted data without compromising patient privacy. This could include analyzing genomic data or conducting clinical trials. For example, a homomorphic calculation may be performed on medical data, e.g., medical sensor data, e.g., a medical image. The medical data may comprise genomic data.

Cloud computing: The encryption may be used to securely outsource computation to untrusted cloud providers. Computations may be performed on encrypted data stored in the cloud, without ever having to decrypt the data.

Machine learning: The encryption may be used to perform machine learning computations on encrypted data. This could include training models on encrypted data or making predictions on encrypted data without ever decrypting it. For example, a neural network may be trained and/or evaluated on encrypted data.

For example, multiple data sources may be provided with the public key corresponding to the same private key. A data source uses the public key to encrypt its data and send it to a homomorphic calculation device. At the homomorphic calculation device a machine learnable model is trained, e.g., a neural network. The resulting parameters are then sent to a decryption device. For example, the data sources may correspond to hospitals or the like. The encrypted data may be medical data. This may be used, e.g., to train a neural network on data contributed from multiple parties, without the need to share plain training data. The multiple data source may each use the same public key.

Block chains: The encryption may be used to hide data appearing on a public block chain. This could include private data like a user's account balance. Using encryption would enable wiring money by checking on encrypted data that the user's balance is sufficient for the transfer. Doing so would hide the exact balance of the user.

Internet of Things (IoT) applications: The encryption may be used to securely process sensor data in real-time, without exposing the data to third parties. For example, a smart city could use homomorphic encryption to perform calculations on encrypted sensor data to improve traffic flow or reduce energy consumption.

Encryption system 220 generates a bounded, random vector (r). Generating this vector may be done in a similar way as generating the private key. For example, the random vector may be a random binary or ternary vector.

An encryptor 213 takes the public key 280, message scalar 241, and the random vector 251 and uses it to compute an encrypted message 260. Encrypted message 260 comprises a vector 261 and a scalar 262. Computing vector 261 uses the bivariate function introduced for computing the public/private key pair. Encryptor 213 adds a noise component to the encryption 260; preferably both to vector 261 and to scalar 262.

**Figure 3b** schematically shows an example of an embodiment of an encryption system 220'. Encryption system 220' is similar to encryption system 220 but more exemplifying details are provided.

System 220' comprises an encryptor vector generator 213.1. Vector generator 213.1 is configured to receive as input the public key first vector 281 and the random vector 251. Vector generator 213.1 computes the vector 261 by applying the bivariate vector-valued function to the first vector 281, $A$ in the public key and the random vector 251, $r$. The result is a vector 261. The bivariate vector-valued function may be the same function that was used in key generation. A noise component is included in the result. For example a noise vector is generated and added to the result of the bivariate function.

System 220' comprises an inner product generator 213.2. Generator 213.2 is configured to receive as input the public key second vector 282 and the random vector 251, and to compute their inner product 263. Generator 213.2 computes the inner product of the second vector 282, $B$ in the public key and the random vector 251, $r$. This inner product is used to mask an encoding of the plaintext message. Both the plaintext message and the encoding thereof may be represented as a scalar.

System 220' comprises an encryptor scalar generator 213.3. Scalar generator 213.3 adds an encoding ($\tilde{m}$) of the plaintext message 241, $m$; for example, $\tilde{m} = \Delta m$ for some multiplier $\Delta$ or $\tilde{m} = m$. Scalar generator 213.3 also adds a noise component. For example, a random value may be generated and added to the result. Typically, but not necessarily, the noise is drawn at random from a normal distribution centered around zero.

There are various ways to encode a message scalar, e.g., by combining functions that cause the encoded message to be recoverable from the noise. One such possible function is to multiply a scalar representing the message. As the message moves to an upper position with respect to the noise, a rounding operation can remove most or all of the noise. Instead of multiplication with a multiplier, the encoding could be the application of a function that also causes the message scalars to move the the upper position, though not necessarily linearly. Preferably, the function is invertible, at least for the set of message scalars that are used. Another possibility is to encode the message together with an error correcting function. For example, the encoding may have the form $a(b(m))$, wherein $b$ is an error correcting coder, e.g., a BCH, Reed-Solomon, Hamming, etc., while $a$ is an increasing function that maps the domain of $b(m)$ to an upper position. For example, function $a$ may comprise a multiplication with a multiplier, $\Delta$, etc. For example, the function could be a polynomial, though it is not necessary to restrict to polynomials.

Accordingly, the scalar 262, $b$, may be computed as $b = \langle B, r \rangle + \tilde{m} + e_2$, wherein $\tilde{m}$ is an encoding of the message, and $e_2$ is the noise. The choice of the encoding determines the message space and may impact the way the noise may interfere with correct decryption.

Note that two functions are used in key generation and encryption: the bivariate vector valued function, $\circledast$ and the inner product. The latter function could be replaced with a bivariate, scalar function, taking as input two vectors and producing a scalar. As for the bivariate vector valued function, by imposing the encryption followed by decryption should give back the original message, conditions can be set for the both the vector valued function and for the scalar valued function. For example, the inner product can be chosen for the scalar valued function to obtain an LWE-type ciphertext, that is compatible with LWE type homomorphic encryption.

For example, if the vector value function is denoted $f$, and the scalar valued function as $g$, then one way to create conditions on this function is to require that $g(f(A,r),s) = g(f(A,s),r)$, e.g., for all $A, s, r,$ or at least for all those vectors that may be chosen by the system, or at least the condition should hold sufficient often. In fact exact equality is not even needed, so long the error is sufficiently small sufficiently often. Practically speaking it is often easier to evaluate the conditions on $f$ and $g$ when it is assumed that the condition holds exactly for all inputs.

Since in this way the masking part falls out during decryption. A further condition may be that the resulting noise is sufficiently small, the encoding of plaintext does not interfere with the noise error, and any amplification of errors by functions $f$ and/or $g$ is sufficiently small. A more detailed example is given below.

Interestingly, there is considerable freedom in choosing the bivariate functions. It turns out that if one sets the scalar valued function to be the inner product, the conditions of having a working encryption and decryption still allows the vector valued function to be chosen. For example, one condition that could be set is that: $(A \circledast s \circledast r)_i = (A \circledast r \circledast$

**s)$_i$ = ⟨*A* ⊛ *r, s*⟩** for some index *i*, wherein the angle brackets represent the inner product. For example, assuming linearity, one can evaluate the above expression for a system of independent relations, and thus derive a system of equations for the vector valued function. Below other constructions for the vector valued function are given. As above, the condition could be relaxed if desired.

In an embodiment, the dimension of the private key vector, the first and second public key vector, and the vector in an encryption are typically the same. The dimension may be at least 512, at least 1024.

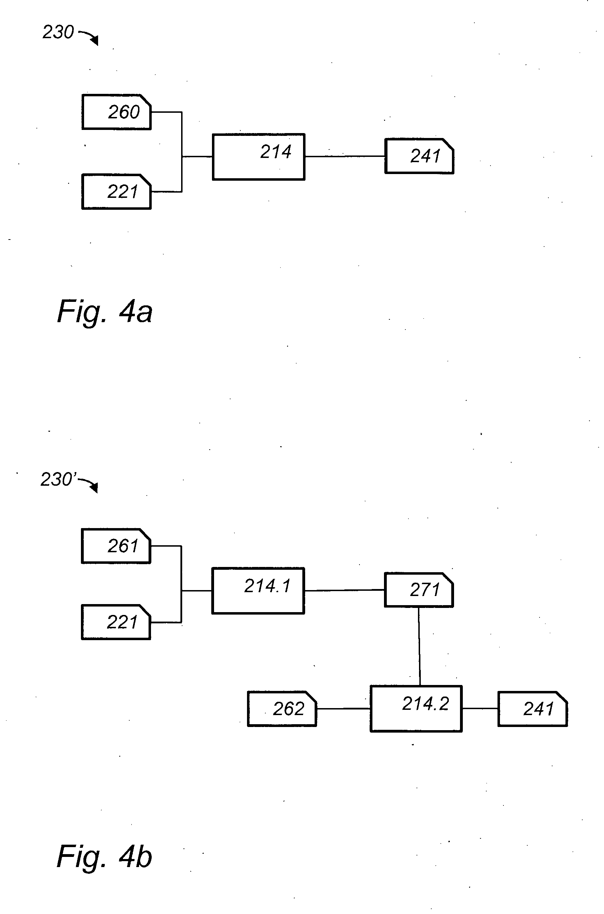

**Figure 4a** schematically shows an example of an embodiment of a decryption system 230.

Decryption system 230 comprises a decryptor 214 configured to receive as input the public key encryption 260, a private key 221. For example, system 230 may receive the private key from the public/private key generator 210. Alternatively, the decryptor 230 and generator 210 may be implemented in the same system.

Decryption system 230 may receive the encryption 260 from an encryption system 220. Decryption system 230 may receive the encrypted message 260 from a calculation device 140. Decryptor 214 is configured to compute the original plaintext message scalar from the public key encryption and the private key 221.

**Figure 4b** schematically shows an example of an embodiment of a decryption system 230'. System 230' is similar to system 230, but more exemplifying details are included.

System 230' comprises an inner product generator 214.1 configured to compute the inner product between the vector component 261 of a public-key encrypted message and the private key 221. The resulting inner product 271 is subtracted from the scalar component 262 of the public-key encrypted message. The latter equals the encoded message scalar plus an error $\tilde{m} + e$. The rounding/decoding unit (214.2) is configured to obtain the message scalar from the noisy encoded message scalar. For example, if the encoding comprises multiplying with a multiplier, then recovering the message may comprise rounding this value, possibly combined with other decoding steps.

For example, if $\tilde{m} = \Delta m,$ decryption system 230' may decrypt a public key ciphertext *c = (a, b),* using secret decryption key *s,* the system may compute $\lceil (\mu^* \bmod q)/\Delta \rfloor$ mod *t* wherein, $\mu^* = b - ⟨\boldsymbol{a,s}⟩$. Note that this corresponds to LWE-type decryption.

Generally speaking, the systems can be configured by choosing the encoding larger and the error smaller so that the message *m* can be recovered from this value $\tilde{m} + e$.

**The bivariate, vector-valued function**

The bivariate, vector-valued function ⊛ may be derived from a convolution (*) and a univariate function ($\varphi_1$), the bivariate function for a first vector (*u*) and a second vector (*v*) being defined as the convolution applied to the first vector and a vector obtained from the univariate function applied to the second vector (*u* ⊛ *v* = *u* * $\varphi_1$(*v*)). This is advantageous as determining the univariate function is easier than if the bivariate vector-valued function were derived without this construction. Accordingly, determining a suitable vector-valued function ⊛ is faster and requires less storage. In this way a known convolution can be taken and adapted to get a new vector operator; i.e., bivariate, vector-valued function ⊛, enabling the construction of a public/private key encryption system producing LWE-type ciphertexts.

Determining the univariate function, and thus the vector valued function, becomes even easier when the univariate function is taken to be linear. For such a univariate function, one further requires that one component of the vector valued function equals the inner product of the inputs. That is, an index *i* may be chosen such that the output of the bivariate, vector-valued function at index *i*, namely, its *i*-th component, equals the inner product of the two input vectors. That is applied to a first vector (*u*) and a second vector (*v*), the relation (*u* ⊛ *v*)$_i$ = ⟨*u,v*⟩ is satisfied. Once an index *i* has been chosen, other scalar components of index different from of *i* from an induced vector *u* ⊛ *v* can be used as well; for example, (*u* ⊛ *v*)$_j$ for some index *j* ≠ *i*.

Convolutions of vectors may be obtained from a quotient polynomial $\mathfrak{p}$ defining a polynomial module; for example, $\mathbb{Z}[X]/(\mathfrak{p}(X))$ or $\mathbb{T}[X]/(\mathfrak{p}(X))$. Given the quotient polynomial $\mathfrak{p}$ a convolution may be derived. The convolution applied to a first vector and a second vector is obtained by mapping the first and second vector to a first polynomial and a second polynomial, multiplying the first and second polynomials, and reducing the so-obtained polynomial modulo the quotient polynomial ($\mathfrak{p}$), and mapping the result to a vector. The multiplication of the first and second polynomials may preferably use an external multiplication. Note that for rings, the notions of external product and of internal product coincide. From the convolution a bivariate, vector-valued function can be derived, defined by a univariate function as indicated above.

For example, simple system is obtained by taking the reduction polynomials to be $x^n + 1$.

Over $\mathbb{Z}$, the bivariate, vector-valued function may be defined for two vectors *u* = ($u_1, \dots, u_n$), $v = (v_1, \dots, v_n) \in \mathbb{Z}^n$ as the vector

$$w = u \circledast v = (u \circledast_1 v, \dots, u \circledast_n v) \in \mathbb{Z}^n$$

defined by

$$w_i = u \circledast_i v = \sum_{j=1}^{i} u_j \, v_{n+j-i} - \sum_{j=i+1}^{n} u_j \, v_{j-i}.$$

**Multiple messages variant**

Interestingly, multiple messages may be encrypted jointed, saving on storage, and transmission bandwidth. In an embodiment as many scalars can be encrypted as is the dimension of the private vector.

This can be done as follows. Instead of computing only the inner product of the second vector and the random vector, the bivariate, vector-valued function (**B** ⊛ **r**) is applied to the second vector (**B**) and the random vector (**r**), a distinct component of which being used for encrypting each message. The function can be arranged so that one of the components of the resulting vector is the inner product of the second vector (**B**) in the public key and the random vector (**r**). So this inner product is still computed, but together with other components of the vector **B** ⊛ **r**.

For the index (*i*) in the resulting ciphertext for which the vector component corresponds to the inner product, an LWE format encryption is obtained as in an embodiment. The other vector elements may still be used for encryption.

For example, for the public-key encryption of multiple scalars ($m_k$) representing multiple plaintext messages, one may compute

$b_\ell \leftarrow (\mathbf{B} \circledast \mathbf{r})_{j\ell} + \tilde{m}_\ell + e_{2,\ell}$, wherein $\ell$ runs from 1 to the number of messages, and wherein $\tilde{m}_\ell$ is an encoding of message $m_\ell$.

For the whole set of $b_\ell$ one vector **a** as in an embodiment is computed, e.g., by applying the bivariate vector-valued function to the first vector (**A**) in the public key and the random vector (**r**), and preferably adding first noise vector (**e₁**). This significantly shortens the size of an encryption of this set. If more message scalars than the dimension of **r** need to be encrypted, then a new random vector may be computed, and a new vector **a** may be computed.

Typically, all encryptions of multiple messages scalars will all use the same encoding, e.g., using same multiplier Δ, and noise from the same distribution. This is not necessary though; for example, some message scalars may be encrypted with low noise, and a lower-position encoding, while others may use higher noise and a higher-position encoding.

Below several further optional refinements, details, and embodiments are illustrated.

Let $\mathfrak{p}$ be a monic (irreducible) polynomial of degree $n$. Let also $\mathcal{R}$ and $\mathcal{R}_q$ denote the polynomial rings $\mathbb{Z}[X]/(\mathfrak{p}(X))$ and $\mathcal{R}/(q) = (\mathbb{Z}/q\mathbb{Z})[X]/(\mathfrak{p}(X))$, respectively. A polynomial $\mathfrak{a} \in \mathcal{R}$ (resp. $\mathfrak{a} \in \mathcal{R}_q$) of degree less than $n$ and given by $\mathfrak{a}(X) = \sum_{i=0}^{n-1} a_i X^i$ with $a_i \in \mathbb{Z}$ (resp. $a_i \in \mathbb{Z}/q\mathbb{Z}$) can be identified with its coefficient vector $\mathbf{a} := (a_0, a_1, \dots, a_{n-1}) \in \mathbb{Z}^n$ (resp. $\in (\mathbb{Z}/q\mathbb{Z})^n$). Over $\mathcal{R}_q$, we let $\Upsilon_q$ denote the corresponding map

$$\Upsilon_q \colon \mathcal{R}_q \xrightarrow{\sim} (\mathbb{Z}/q\mathbb{Z})^n,$$

$$\mathfrak{a} = \sum_{i=0}^{n-1} a_i X^i \longmapsto \Upsilon_q(\mathfrak{a}) = (a_0, a_1, \dots, a_{n-1}).$$

This one-to-one correspondence defines a convolution $*$ between two vectors in $(\mathbb{Z}/q\mathbb{Z})^n$. Given $\mathbf{a}, \mathbf{b} \in (\mathbb{Z}/q\mathbb{Z})^n$, their convolution may be defined as

$$\mathbf{a} * \mathbf{b} = \Upsilon_q(\Upsilon_q^{-1}(\mathbf{a}) \cdot \Upsilon_q^{-1}(\mathbf{b})) \in (\mathbb{Z}/q\mathbb{Z})^n$$

where $\cdot$ denote the polynomial multiplication in $\mathcal{R}_q$.

Using a convolution operator, e.g., as defined above, a public/private key system may be formulated. The secret key comprises a small vector $s \in \mathbb{Z}^n$ and the public key is a pair of vectors ($A$, $B$) where $A$ is a random vector in $(\mathbb{Z}/q\mathbb{Z})^n$ and $\dot{B} = A * s + e$ (mod $q$) for some small random vector $e \in \mathbb{Z}^n$. Then encryption of a plaintext m seen as a vector in $(\mathbb{Z}/t\mathbb{Z})^n$ is given by the pair of vectors ($a$, $b$) in $(\mathbb{Z}/q\mathbb{Z})^n$ where

$$\begin{cases} a = A * r + e_1 \\ b = B * r + \Delta m + e_2 \end{cases} \tag{1}$$

for some small random vector $r \in \mathbb{Z}^n$ and small random noise errors $e_1, e_2 \in \mathbb{Z}^n$. Next, given ciphertext ($a$, $b$), plaintext $m$ can be recovered using secret key $s$ from the phase $b - a * s = \Delta m + E$ (mod $q$) where $E := e * r + e_2 - e_1 * s \in \mathbb{Z}^n$. More generally, $\Delta m$ may be replaced with an encoded vector $\tilde{m}$. Futhermore, encryption is defined over the ring $\mathbb{Z}/q\mathbb{Z}$ for illustration; a similar cryptosystem can easily be adapted and described for example over the discretized torus $\mathbb{T}_q$ or the real torus $\mathbb{T}$.

Three observations are in order:

1. If $b_i$ (resp. $m_i$) denotes the i-th component of vector $b$ (resp. $m$) in (1) then the pair ($a$, $b_i$) is an LWE-type ciphertext encrypting a message $m_i \in \mathbb{Z}/t\mathbb{Z}$ provided that

$$b_i - \langle a, s \rangle = \Delta m_i + (\text{small noise}).$$

In particular, we have

$$\begin{aligned} b_i - \langle a, s \rangle &= (B * r)_i + \Delta m_i + (e_2)_i - \langle A * r + e_1, s \rangle \\ &= ((A * s + e) * r)_i + \Delta m_i + (e_2)_i - \langle A * r + e_1, s \rangle \\ &= \Delta m_i + (A * s * r)_i - \langle A * r, s \rangle \\ &\qquad + (e * r)_i + (e_2)_i - \langle e_1, s \rangle. \end{aligned}$$

As a consequence, if the condition

$$(A * s * r)_i \approx \langle A * r, s \rangle \tag{2}$$

is satisfied, one ends up with an LWE-type ciphertext for plaintext $m_i \in \mathbb{Z}/t\mathbb{Z}$.

2. If the public key is replaced with $(A, B = A * \varphi_1(s) + e) \in (\mathbb{Z}/q\mathbb{Z})^n \times (\mathbb{Z}/q\mathbb{Z})^n$ for some (bijective) map $\varphi_1 : (\mathbb{Z}/q\mathbb{Z})^n \to (\mathbb{Z}/q\mathbb{Z})^n$ then Condition (2) relaxes to

$$(A * \varphi_1(s) * r)_i \approx \langle A * r, s \rangle. \tag{3}$$

3. Further, the above encryption scheme is unchanged if vector $r$ is replaced with vector $\varphi_2(r)$ for some (bijective) map $\varphi_2 : (\mathbb{Z}/q\mathbb{Z})^n \to (\mathbb{Z}/q\mathbb{Z})^n$. In particular, taking $\varphi_2 = \varphi_1$ and letting $u \circledast v = u * \varphi_1(v)$, Condition (3) can be written as

$$(A \circledast s \circledast r)_i = (A \circledast r \circledast s)_i \approx \langle A \circledast r, s \rangle. \qquad (4)$$

One can find a map $\varphi_1$ such that Condition (4) is strictly verified. Define $C = A \circledast r = (C_1, \dots, C_n)$ and write $\varphi_1(s) = (s'_1, \dots, s'_n)$. Then, since by definition $C \circledast s = C * \varphi_1(s)$,
$(C \circledast s)_i := (C * \varphi_1(s))_i = \langle C, s \rangle \Leftarrow$

$$(\Upsilon_q((\textstyle\sum_{j=1}^n C_j X^{j-1}) \cdot (\sum_{j=1}^n s'_j X^{j-1})))_i = \sum_{j=1}^n C_j s_j \pmod q. \qquad (5)$$

The left-hand side of the last equation can be rewritten as

$$\textstyle\sum_{j=1}^n C_j \left(\sum_{k=1}^n \alpha_{j,k} s'_k\right) \qquad (6)$$

for some $\alpha_{j,k} \in \mathbb{Z}/q\mathbb{Z}$ given by the multiplication $\cdot$ in $\mathcal{R}_q$. Equating each multiplier of $C_j$ yields a system of $n$ equations, $\sum_{k=1}^n \alpha_{j,k} s'_k = s_j$ (for $1 \le j \le n$), from which values for $s'_1, \dots, s'_n$ can be derived and, in turn, map $\varphi_1$.

The following public-key encryption scheme may be defined. For security reasons, quotient polynomial $\mathrm{p}(X)$ is preferably restricted to cyclotomic polynomials $\Phi_M(X)$. The construction however carries over for any quotient polynomial. Corresponding to ring $\mathbb{Z}/q\mathbb{Z}$, one has $\mathcal{R}_q = (\mathbb{Z}/q\mathbb{Z})[X]/(\Phi_M(X))$ with $n = \deg(\Phi_M)$. The multiplication in $\mathcal{R}_q$ is denoted by $\cdot$ and the corresponding convolution in $(\mathbb{Z}/q\mathbb{Z})^n$ by $*$. The 'specialized' convolution operator in $(\mathbb{Z}/q\mathbb{Z})^n$ is denoted by Q. For any two vectors $u, v \in (\mathbb{Z}/q\mathbb{Z})^n$, we define $u \circledast v = u * \varphi_1(v)$. With this corresponding definition of $\varphi_1$, it holds by construction that $(u \circledast v)_i = \langle u, v \rangle$.

Key Generation: On input of a security parameter $\kappa$, define an integer $n = \phi(M)$ for some integer M and where $\phi$ denotes Euler's totient function, select positive integers $t$ and q with $t|q$, let $\Delta = q/t$, and define two discretized error distributions $\hat{\chi}_1$ and $\hat{\chi}_2$ over $\mathbb{Z}$.

Sample uniformly at random a vector $s = (s_1, \dots, s_n) \xleftarrow{\$} \{0,1\}^n$. Using $s$, select uniformly at random a vector $A \xleftarrow{\$} (\mathbb{Z}/q\mathbb{Z})^n$ and form the vector

$$B = A \circledast s + e \in (\mathbb{Z}/q\mathbb{Z})^n$$

with $e \leftarrow \hat{\chi}_1^n$. The plaintext space is $\mathcal{M} = \{0, 1, \dots, t-1\}$. The public parameters are pp = $\{n, \sigma, t, q, \Delta\}$, the ▪ public key is pk = $(A, B)$, and the private key is sk = $s$.

Encryption: The public-key encryption of a plaintext $m \in \mathcal{M}$ is given by $c = (a, b) \in (\mathbb{Z}/q\mathbb{Z})^{n+1}$ with

$$\begin{cases} a = A \circledast r + e_1 \\ b = \langle B, r \rangle + \Delta m + e_2 \end{cases}$$

for a random vector $r \xleftarrow{\$} \{0,1\}^n$, and where $e_1 \leftarrow \hat{\chi}_1^n$ and $e_2 \leftarrow \hat{\chi}_2$.

Decryption: To decrypt c = $(a, b)$, using secret decryption key $s$, return

$$\left\lceil \frac{\mu^* \bmod q}{\Delta} \right\rfloor \bmod t$$

where $\mu^* = b - \langle \boldsymbol{a}, \boldsymbol{s} \rangle$. Instead of using a multiple $\Delta m$ of the message scalar, more generally another encoding $\tilde{m}$ may be used. For example, for the ring $\mathbb{Z}/q\mathbb{Z}$, when $t$ does not divide $q$, one may take

$$\tilde{m} = \lceil q/t \rceil \, m \text{ or } \tilde{m} = \lceil (q/t)m \rceil.$$

. Flooring or ceiling functions may also be chosen for the definition of $\tilde{m}$, instead of the rounding function.

Importantly, a ciphertext output by the previous cryptosystem has the form of an LWE-type ciphertext. Namely, it can be decrypted as an LWE ciphertext. Indeed, we can verify that a ciphertext $\boldsymbol{c} = (\boldsymbol{a}, \boldsymbol{b})$ satisfies $b - \langle \boldsymbol{a}, \boldsymbol{s} \rangle = \Delta m + $ (small noise):

$$\begin{aligned} b - \langle \boldsymbol{a}, \boldsymbol{s} \rangle &= \langle \boldsymbol{B}, \boldsymbol{r} \rangle + \Delta\, m + e_2 - \langle \boldsymbol{A} \circledast \boldsymbol{r} + \boldsymbol{e_1}, \boldsymbol{s} \rangle \\ &= \Delta\, m + e_2 + \langle \boldsymbol{A} \circledast \boldsymbol{s} + \boldsymbol{e}, \boldsymbol{r} \rangle - \langle \boldsymbol{A} \circledast \boldsymbol{r} + \boldsymbol{e_1}, \boldsymbol{s} \rangle \\ &= \Delta\, m + e_2 + \langle \boldsymbol{e}, \boldsymbol{r} \rangle - \langle \boldsymbol{e_1}, \boldsymbol{s} \rangle \end{aligned}$$

noting that $\langle \boldsymbol{A} \circledast \boldsymbol{s}, \boldsymbol{r} \rangle = (\boldsymbol{A} \circledast \boldsymbol{s} \circledast \boldsymbol{r})_i = (\boldsymbol{A} * \varphi_1(\boldsymbol{s}) * \varphi_1(\boldsymbol{r}))_i = (\boldsymbol{A} * \varphi_1(\boldsymbol{r}) * \varphi_1(\boldsymbol{s}))_i = (\boldsymbol{A} \circledast \boldsymbol{r} \circledast \boldsymbol{s})_i = \langle \boldsymbol{A} \circledast \boldsymbol{r}, \boldsymbol{s} \rangle$.

It is useful to introduce a new vector operator. The *reverse negative wrapped convolution* of two vectors $\boldsymbol{u} = (u_1, \ldots, u_n)$, $v = (v_1, \ldots, v_n) \in \mathbb{Z}^n$ is the vector $\boldsymbol{w} = \boldsymbol{u} \circledast v = $

$$(\boldsymbol{u} \circledast_1 v, \ldots, \boldsymbol{u} \circledast_n v) \in \mathbb{Z}^n$$

defined by

$$w_i = \boldsymbol{u} \circledast_i v = \sum_{j=1}^{i} u_j \, v_{n+j-i} - \sum_{j=i+1}^{n} u_j \, v_{j-i}.$$

For example, $(1,2,3) \circledast (4,5,6)$ is the vector $(-17,5,32)$.

For a vector $v \in \mathbb{Z}^n$, $\overline{v}$ denotes vector $v$ in reverse order; e.g., if $v = (v_1, \ldots, v_n)$ then $\overline{v} = (v_n, \ldots, v_1)$. The above convolution bears its name from the classical negative wrapped convolution (a.k.a. skew circular convolution or negacyclic convolution) defined by $\boldsymbol{w} = \boldsymbol{u} * v$ where $w_i = \sum_{j=1}^{i} u_j \, v_{i+1-j} - \sum_{j=i+1}^{n} u_j \, v_{n+1+i-j}$. Indeed, it turns out that $\boldsymbol{u} \circledast v = \boldsymbol{u} * \overline{v}$.

The main properties of the reverse negative wrapped convolution are captured hereafter. Given three vectors $t, u, v \in \mathbb{Z}^n$, it holds that

1. $u \circledast v = \overline{v} \circledast \overline{u}$.
2. $u \circledast_n v = \langle u, v \rangle$
3. $\langle t \circledast u, v \rangle = \langle t \circledast v, u \rangle$

Indeed, The first property is immediate. Since $*$ is commutative, it follows that $\boldsymbol{u} \circledast \boldsymbol{v} = \boldsymbol{u} * \overline{\boldsymbol{v}} = \overline{\boldsymbol{v}} * \boldsymbol{u} = \overline{\boldsymbol{v}} \circledast \overline{\boldsymbol{u}}$.

Now, write $\boldsymbol{t} = (t_1, \ldots, t_n)$, $\boldsymbol{u} = (u_1, \ldots, u_n)$, and $v = (v_1, \ldots, v_n)$. From the definition, denoting $[\text{pred}] = 1$ if some predicate pred is true and $[\text{pred}] = 0$ otherwise, $\boldsymbol{u} \circledast_i v$ is expressed compactly as $\sum_{j=1}^{n} (-1)^{[j>i]} u_j \, v_{[j \le i]n+j-i}$. Plugging $i = n$ leads to

$$u \circledast_n v = \sum_{j=1}^{n} u_j \, v_j = \langle u, v \rangle.$$

Likewise,

$$\langle t \circledast u, v \rangle = \sum_{i=1}^{n} \left( \sum_{j=1}^{n} (-1)^{[j>i]} t_j \, u_{[j\leq i]n+j-i} \right) v_i$$

$$= \sum_{j=1}^{n} t_j \left( \sum_{i=1}^{n} (-1)^{[i<j]} u_{[i\geq j]n+j-i} \, v_i \right)$$

$$= \sum_{j=1}^{n} t_j \left( -\sum_{i=1}^{j-1} u_{j-i} \, v_i + \sum_{i=j}^{n} u_{n+j-i} \, v_i \right)$$

$$= \sum_{j=1}^{n} t_j \left( -\sum_{i=1}^{j-1} v_{j-i} \, u_i + \sum_{i=j}^{n} v_{n+j-i} \, u_i \right)$$

$$= \langle t \circledast v, u \rangle$$

by symmetry.

Observe that the above is a specialization of the previous setting; it corresponds to $M = 2^{\eta+1}$, $\mathrm{p}(X) = X^n + 1$ with $n = 2^\eta$, and letting $s = (s_1, \dots, s_n)$, $\varphi_1(s) = = (s_n, \dots, s_1)$. This yields the following embodiment.

**Detailed example embodiment**

Equipped with the Q operator, a public-key cryptosystem can now be presented. Interestingly, the encryption algorithm outputs regular LWE-type ciphertexts. As a consequence, the decryption algorithm is unchanged.
Below are the descriptions of the key generation algorithm, of the encryption algorithm and of the decryption algorithm.
Key Generation: On input of a security parameter $\kappa$, define an integer $n = 2^\eta$ for some $\eta > 0$, select positive integers $t$ and $q$ with $t|q$, let $\Delta = q/t$, and define two discretized error distributions $\hat{\chi}_1$ and $\hat{\chi}_2$ over $\mathbb{Z}$.

Sample uniformly at random a vector $s = (s_1, \dots, s_n) \overset{\$}{\leftarrow} \{0,1\}^n$. Using $s$, select uniformly at random a vector $A \overset{\$}{\leftarrow} (\mathbb{Z}/q\mathbb{Z})^n$ and form the vector $B = A \circledast s + e \in (\mathbb{Z}/q\mathbb{Z})^n$ with $e \leftarrow \hat{\chi}_1^n$.

The plaintext space is $\mathcal{M} = \{0, 1, \dots, t-1\}$. The public parameters are pp = {n, $\sigma$ t, q, $\Delta$}, the public key is pk = ($A$, $B$), and the private key is sk = $s$.

Encryption: The public-key encryption of a plaintext $m \in \mathcal{M}$ is given by $c = (a, b) \in (\mathbb{Z}/q\mathbb{Z})^{n+1}$ with

$$\begin{cases} a = A \circledast r + e_1 \\ b = \langle B, r \rangle + \Delta \, m + e_2 \end{cases}$$

for a random vector $r \overset{\$}{\leftarrow} \{0,1\}^n$, and where $e_1 \leftarrow \hat{\chi}_1^n$ and $e_2 \leftarrow \hat{\chi}_2$.
Decryption: To decrypt $c = (a, b)$, using secret decryption key $s$, return

$$\left\lceil \frac{\mu^* \bmod q}{\Delta} \right\rfloor \bmod t$$

where $\mu^* = b - \langle a, s \rangle$.

**Correctness**

Let c = (a,b) be the public-key encryption of $m$ as returned by the encryption algorithm. Then, $b - \langle a, s \rangle = \langle A \circledast s + e, r \rangle + \Delta m + e_2 - \langle A \circledast r + e_1, s \rangle = \Delta m + e_2 + \langle e, r \rangle - \langle e_1, s \rangle + \langle A \circledast s, r \rangle - \langle A \circledast r, s \rangle = \Delta m + E$ where $E = e_2 + \langle e, r \rangle - \langle e_1, s \rangle$. Decryption correctness is obtained at least if $|E| < \Delta/2$.

**Security**

The semantic security [7] of the proposed cryptosystem is stated under the RLWE assumption [9] in $\mathbb{Z}_{n,q}[X] := (\mathbb{Z}/q\mathbb{Z})[X]/(X^n + 1)$ .

[RLWE Assumption] Given a security parameter $\kappa$, let $n$, $q \in \mathbb{N}$ with $n$ a power of 2 and let $s \xleftarrow{\$} \mathbb{B}[X]/(X^n + 1)$ where $\mathbb{B} = \{0,1\}$. Let also $\hat{\chi}$ be an error distribution over $\mathbb{Z}[X]/(X^n + 1)$; namely, over polynomials of $\mathbb{Z}[X]/(X^n + 1)$ with coefficients drawn according to $\hat{\chi}$. The *ring learning with errors (RLWE) problem* is to distinguish samples chosen according to the following distributions:

$$dist_0(1^\kappa) = \{(\mathfrak{a},\mathfrak{b}) | \mathfrak{a} \xleftarrow{\$} \mathbb{Z}_{n,q}[X], \mathfrak{b} \xleftarrow{\$} \mathbb{Z}_{n,q}[X]\}$$

and

$$dist_1(1^\kappa) = \{(\mathfrak{a},\mathfrak{b}) | \mathfrak{a} \xleftarrow{\$} \mathbb{Z}_{n,q}[X], \mathfrak{b} = \mathfrak{a}\,s + e \in \mathbb{Z}_{n,q}[X], e \leftarrow \hat{\chi}\}.$$

The *RLWE assumption* posits that for all .probabilistic polynomial-time algorithms $\mathcal{R}$, the. function

$$|\Pr[\mathcal{R}(\mathfrak{a},\mathfrak{b}) = 1 | (\mathfrak{a},\mathfrak{b}) \xleftarrow{\$} dist_0(1^\kappa)] - \Pr[\mathcal{R}(\mathfrak{a},\mathfrak{b}) = 1 | (\mathfrak{a},\mathfrak{b}) \xleftarrow{\$} dist_1(1^\kappa)]|$$

is negligible in $\kappa$.

Polynomials in $\mathbb{Z}_{n,q}[X]$ are identified with their coefficient vectors in $(\mathbb{Z}/q\mathbb{Z})^n$, and conversely. A vector $\boldsymbol{u} = (u_1, \dots, u_n) \in (\mathbb{Z}/q\mathbb{Z})^n$ corresponds to polynomial $\mathfrak{u} = \sum_{j=0}^{n-1} u_{j+1} X^j \in \mathbb{Z}_{n,q}[X]$; the correspondence is written $\boldsymbol{u} \cong \mathfrak{u}$ .

The next relation relates the corresponding operations. Let $\boldsymbol{u} = (u_1, \dots, u_n)$ and $\boldsymbol{v} = (v_1, \dots, v_n) \in (\mathbb{Z}/q\mathbb{Z})^n$ . Let also $\mathfrak{u} = \sum_{j=0}^{n-1} u_{j+1} X^j$ and $\mathfrak{v} = \sum_{j=0}^{n-1} v_{j+1} X^j \in \mathbb{Z}_{n,q}[X]$ . Then

$$\boldsymbol{u} \circledast \overline{\boldsymbol{v}} = \boldsymbol{v} \circledast \overline{\boldsymbol{u}} \cong \mathfrak{u} \cdot \mathfrak{v}.$$

Indeed, if $*$ denotes the reverse negative wrapped convolution, it turns out that $\boldsymbol{w} = (w_1, \dots, w_n) := \boldsymbol{u} \circledast \overline{\boldsymbol{v}} = \boldsymbol{u} * \boldsymbol{v}$ with $w_i = \sum_{j=1}^{i} u_j v_{i+1-j} - \sum_{j=i+1}^{n} u_j v_{n+1+i-j}$ . Now looking at the corresponding polynomials $\mathfrak{u}$ and $\mathfrak{p}$ , it is easily seen that their multiplication in $\mathbb{Z}_{n,q}[X] = (\mathbb{Z}/q\mathbb{Z})[X](X^n + 1)$ yields polynomial $\mathfrak{w} = \sum_{j=0}^{n-1} w_{j+1} X^j$ .Hence, we have $\boldsymbol{w} \cong \mathfrak{w}$ or, equivalently,

$$\boldsymbol{u} \circledast \overline{\boldsymbol{v}} \cong \mathfrak{u} \cdot \mathfrak{v}$$

. The equality $\boldsymbol{u} \circledast \overline{\boldsymbol{v}} = \boldsymbol{v} \circledast \overline{\boldsymbol{u}}$ then follows.

Back to the encryption scheme, observe that the public key pk = ($\boldsymbol{A}$, $\boldsymbol{B} = \boldsymbol{A} \circledast \boldsymbol{s} + \boldsymbol{e}$) corresponds to a polynomial RLWE sample under secret key $\sum_{j=0}^{n-1} s_{n-j} X^j \cong \bar{s} = (s_n, \dots, s_1)$. Under the RLWE assumption, the public key as output by the key generation algorithm is therefore pseudo-random; e.g., indistinguishable from uniform. Regarding a ciphertext $c = (a, b)$ with $a = A \circledast r + e_1$ and $b = (B, r) + \Delta m + e_2$, consider the vector $b: = B \circledast r + e_2$ for some $e_2 \in \chi_2^n$ such that $(e_2)_n = e_2$. Again, it is worth noting that the pairs $(A, a = A \circledast r + e_1)$ and $(B, b = B \circledast r + e_2)$ correspond respectively to two (polynomial) RLWE samples under 'secret key' $\sum_{j=0}^{n-1} r_{n-j} X^j \cong \bar{r}$ and thus appear to be pseudo-random. The same is true for $\langle B, r \rangle + e_2$, this turns out to be the nth component of vector $B \circledast r + e_2$: $\langle B, r \rangle + e_2 = B \circledast_n r + (e_2)_n$. It is also important that the randomness can be re-used in multiple ciphertexts provided they are all encrypted under different keys. Indeed, when the randomness is given explicitly in a ciphertext, it is readily verified that the reproducibility criterion is satisfied.

The semantic security under the RLWE assumption is established by a series of hybrid games where the different RLWE samples are successively replaced with uniform samples.

With the notation of above, this corresponds to $\mathfrak{p}(X) = X^n + 1$ and, letting $s = (s_1, \dots, s_n)$, $\varphi_1(s) = (s_n, \dots, s_1)$. Indeed, for $i = n$ and $\mathfrak{p}(X) = X^n + 1$, left-hand side of eq:cond2e becomes

$$(\Upsilon_q((\textstyle\sum_{j=1}^n C_j X^{j-1}) \cdot (\textstyle\sum_{j=1}^n s'_j X^{j-1})))_n = \textstyle\sum_{j=1}^n C_j s'_{n+1-j}$$

thus,

$$(\alpha_{j,k})_{\substack{1 \le j \le n \\ 1 \le k \le n}} = \begin{pmatrix} 0 & 0 & \dots & 0 & 1 \\ 0 & 0 & \dots & 1 & 0 \\ \vdots & \vdots & \ddots & & \vdots \\ 0 & 1 & \dots & 0 & 0 \\ 1 & 0 & \dots & 0 & 0 \end{pmatrix}.$$

Equating each multiplier of $C_j$ with those of $\sum_{j=1}^n C_j s_j$ yields $s'_{n+1-j} = s_j$ or, equivalently, $(s'_1, \dots, s'_n) = (s_n, \dots, s_1)$; and thus $\varphi_1(s) = (s_n, \dots, s_1)$.

**Performance**

The public key expands to $2n |q|_2$ bits. If the component $\mathfrak{a}$ of the public key is generated from a random seed, the public key only requires $n |q|_2 + \kappa$ bits for its storage or transmission. With the example parameters this amounts to 65664 bits, or about 8.2 kB.

Suppose normal distributions for $\hat{\chi}_i$: $\hat{\chi}_i = \mathcal{N}(0, \sigma_i^2)$ for $i \in \{1,2\}$. For a ciphertext c output by the encryption algorithm, the noise variance satisfies $\text{Var}(\text{Err}(c)) = \text{Var}(e_2 + \langle e, r \rangle - \langle e_1, s \rangle) = \text{Var}(e_2) + \sum_{j=1}^n \text{Var}((e)_i r_i) + \sum_{j=1}^n \text{Var}((e_1)_j s_j) = \sigma_2^2 + 2n(\sigma_1^2 \frac{1}{4} + \sigma_1^2 (\frac{1}{2})^2 + \frac{1}{4} 0) = \sigma_2^2 + n \sigma_1^2$. Again, with the example parameters, for $\sigma_1^2 = \sigma_2^2$, this translates in an increase of $n + 1 \approx 2^{10}$ in the noise variance. With $\sigma_1 = \sigma_2 = 2^{39}$, the standard deviation of the noise in an output ciphertext is of $2^{44}$. Larger values for ciphertext modulus $q$ lead to larger gains compared to the direct approach using encryptions of 0 for the public key.

In an embodiment, multiple plaintexts are encrypted. For example, for $i = n$ and $n$ a power of two, for a vector $x = (x_1, \dots, x_n)$, one can define

$$\Psi_{j\ell}(x) = ((-1)^{[k \le n - j\ell]} x_{1+(k+j\ell-1 \bmod n)})_{1 \le k \le n}.$$

For such a choice for $\Psi_{j\ell}$, it can be verified that $(\Psi_{j\ell}(\boldsymbol{a}), b_{j\ell})$ is an LWE-type ciphertext encrypting plaintext $m_\ell$; that is, that

$$b_{j_\ell} - \langle \Psi_{j_\ell}(\boldsymbol{a}), \boldsymbol{s} \rangle = \Delta\, m_\ell + (\text{small noise}).$$

It is also interesting to observe that when $i = n$, replacing $j_\ell$ by $i$ yields $\Psi_i(\boldsymbol{x}) = (x_k)_{1 \leq k \leq n} = (x_1, \ldots, x_n)$; namely, $\Psi_i$ is the identity map.

There are a number of possible variants that apply to the detailed example embodiment as well as to other embodiments. Instead of selecting $t|q$, plaintext modulus $t$ can be more generally chosen as an arbitrary positive integer $< q$. In this case, a plaintext $m$ is encrypted as $\boldsymbol{c} = (\boldsymbol{a}, b)$ with $\boldsymbol{a} = \boldsymbol{A} \circledast \boldsymbol{r} + \boldsymbol{e_1}$ and

$$b = \langle \boldsymbol{B}, \boldsymbol{r} \rangle + \lceil q/t \rfloor\, m + e_2 \quad \text{or} \quad b = \langle \boldsymbol{B}, \boldsymbol{r} \rangle + \lceil (q/t)\, m \rfloor + e_2$$

. Instead of the rounding function, flooring and ceiling-functions can also be used when $t \nmid q$ . In the general case, message $m$ is encoded into $\tilde{m}$.

Another variant is to select private key s and/or randomizer $\boldsymbol{r}$ at random from another set; e.g., from $\{-1,0,1\}^n$.

Another variant is to rely on another vector convolution operator that is compatible with the multiplication in

$\mathbb{Z}_{n,q}[X]$ . The map $\varphi_1$ used above corresponds to $\varphi_1(\boldsymbol{s}) = (s_n, \ldots, s_1)$. This can be obtained by selecting $i = n$. A variant therefore consists in choosing another value for $i$. For a general value for $i \neq n$, the vector $\boldsymbol{s} = (s_1, \ldots, s_n)$ is mapped to

$$\varphi_1(\boldsymbol{s}) = (s_i, \ldots, s_1, -s_n, \ldots, -s_{i+1})$$
$$= ((-1)^{[j>i]}\, s_{1+(i-j \bmod n)})_{1 \leq j \leq n}.$$

For example, for $i = n - 1$, one has $\varphi_1(s) = (s_{n-1}, \ldots, s_1, -s_n)$. The matching specialized convolution operator is defined as $\boldsymbol{u} \circledast \boldsymbol{v} = \boldsymbol{u} * \varphi_1(\boldsymbol{v})$ for any two vectors $\boldsymbol{u}$ and $\boldsymbol{v}$, where $*$ denotes the classical negative wrapped convolution operator.

With this corresponding definition of $\varphi_1$, it holds by construction that $\boldsymbol{u} \circledast_i \boldsymbol{v} = \langle u, v \rangle$ for any two vectors $\boldsymbol{u}$ and $\boldsymbol{v}$, for any $1 \leq i \leq n$.

Yet another variant is to consider the convolution associated with the multiplication associated with other polynomial rings, including with the multiplication in arbitrary cyclotomic rings $(\mathbb{Z}/q\mathbb{Z})[X]/(\Phi_M(X))$ with $n = \deg(\Phi_M)$. For example, if $M = 3^w$ then $n = 2 \cdot 3^{w-1}$ and $p(X) = X^n + X^{n/2} + 1$. For $i = n$, $*$ corresponds to the multiplication in $(\mathbb{Z}/q\mathbb{Z})[X]/(X^n + X^{n/2} + 1)$ and

$$\varphi_1(\boldsymbol{s}) = (s_n + s_{n/2}, s_{n-1} + s_{n/2-1}, \ldots, s_{n-(n/2-1)} + s_{n/2-(n/2-1)},$$
$$s_{n/2}, s_{n/2} - 1, \ldots, s_{n/2-(n/2-1)})$$
$$= (s_{n+1-j} + [j \leq n/2]\, s_{1+(n/2-j \bmod n)})_{1 \leq j \leq n}.$$

Again, by construction, letting $\boldsymbol{u} \circledast \boldsymbol{v} = \boldsymbol{u} * \varphi_1(\boldsymbol{v})$, it holds that $\boldsymbol{u} \circledast_i \boldsymbol{v} = \langle u, v \rangle$ for any two vectors u and $v$.

This embodiment presents the advantage that the condition $n$ being a power of two can be relaxed. For quotient polynomial $p(X) = \Phi_M(X)$, the corresponding value for $n$ is given by the Euler's totient function of $M$. In the above example, $n = 2M/3$.

**Encrypting multiple plaintexts**

Multiple plaintexts may be encrypted, by encrypting them individually. For $Z$ plaintexts this requires

$Z \cdot (n+1) \lceil \log_2 q \rceil$ bits for the corresponding ciphertexts. As will be described, a better way only makes use of $(\lceil Z/n \rceil \, n + Z) \lceil \log_2 q \rceil$ bits. This saves

$$(Z - \lceil Z/n \rceil) \cdot n \lceil \log_2 q \rceil$$

bits.

Given an LWE dimension n and a convolution operator $*$ operating on $n$-dimensional vectors, fix an integer $i \in \{1, \dots, n\}$. This integer $i$ defines a map $\varphi_1$ and, in turn, the matching specialized convolution operator $\circledast$ as $\boldsymbol{u} \circledast \boldsymbol{v} = \boldsymbol{u} * \varphi_1(v)$ for any two n-dimensional vectors $\boldsymbol{u}$ and $\boldsymbol{v}$. As detailed in the previous section, this operator $\circledast$ gives rise to a public-key encryption scheme. With the previous notations, a plaintext $m$ may be encrypted under public key $(\boldsymbol{A}, \boldsymbol{B}) \in (\mathbb{Z}/q\mathbb{Z})^{2n}$ as

$$\begin{cases} a = \boldsymbol{A} \circledast \boldsymbol{r} + \boldsymbol{e_1} \\ b = \langle \boldsymbol{B}, \boldsymbol{r} \rangle + \Delta\, m + e_2 \end{cases}$$

for some $\boldsymbol{r} \xleftarrow{\$} \{0,1\}^n$, $e_1 \leftarrow \hat{X}_1{}^n$, and $e_2 \leftarrow \hat{X}_2$. Part $\boldsymbol{a}$ is called the mask of the ciphertext and part b is called the body of the ciphertext.

When Z plaintexts, $m_1, \dots, m_Z$, need to be encrypted, they are first put in $\lceil Z/n \rceil$ bins so that each bin contains at most $n$ plaintexts. Next, for each bin:

1. A fresh mask $\boldsymbol{a}$ is generated from a fresh randomizer $\boldsymbol{r} \xleftarrow{\$} \{0,1\}^n$ and a fresh noise vector $\boldsymbol{e_1} \leftarrow \hat{X}_1{}^n$ as $\boldsymbol{a} \leftarrow \boldsymbol{A} \circledast \boldsymbol{r} + \boldsymbol{e_1}$;
2. The first plaintext, say $m_1$, is encrypted as above; namely, by adding the body $b := b_1 \leftarrow \langle \boldsymbol{B}, \boldsymbol{r} \rangle + \Delta\, m_1 + e_{2,1}$ for a fresh random noise $e_{2,1} \leftarrow \hat{X}_2$;
3. The remaining plaintexts in the bin (if any), say $m_2, \dots, m_L$ for some $L \le n,$ are represented by pairs of the form

$$\{(\boldsymbol{a}, b_\ell)\}_{2 \le \ell \le L}$$

where $\boldsymbol{a}$ is the mask generated in 1 and

$$b_\ell \leftarrow (\boldsymbol{B} \circledast \boldsymbol{r})_{j_\ell} + \Delta\, m_\ell + e_{2,\ell} \quad (\text{for } 2 \le \ell \le \mathrm{L})$$

for a fresh random noise $e_{2,\ell} \leftarrow \hat{X}_2$ and distinct indexes $j_\ell \in \{1, \dots, n\} \backslash \{i\}$.

(Note that, by construction, $(\boldsymbol{B} \circledast \boldsymbol{r})_i = \langle \boldsymbol{B}, \boldsymbol{r} \rangle$.)

Ciphertext $(\boldsymbol{a}, b_1)$ is an LWE format ciphertext but ciphertexts in $\{(\boldsymbol{a}, b_\ell)\}_{2 \le \ell \le L}$ are not. To turn them into LWE format ciphertexts the common mask $\boldsymbol{a}$ needs first to be converted into the corresponding mask $\Psi_{j_\ell}(\boldsymbol{a})$ to get the LWE format ciphertext $(\Psi_{j_\ell}(\boldsymbol{a}), b_{j_\ell})$ for some converting map $\Psi_{j_\ell} : (\mathbb{Z}/q\mathbb{Z})^n \to (\mathbb{Z}/q\mathbb{Z})^n$. There is always such a converting map. For instance, map $\Psi_{j_\ell}$ can be chosen as a linear map satisfying

$$(\boldsymbol{C} \circledast \boldsymbol{s})_{j_\ell} \approx \langle \Psi_{j_\ell}(\boldsymbol{C}), \boldsymbol{s} \rangle$$

for any vector $\boldsymbol{C} = (C_1, \dots, C_n)$. An expression for $\Psi_{j_\ell}$ can be obtained in a way similar to what is done to derive map $\varphi_1$.

**References**

[1] Mihir Bellare, Alexandra Boldyreva, Kaoru Kurosawa, and Jessica Staddon. Multi-recipient encryption schemes: How to save on bandwidth and computation without sacrificing security. IEEE Transactions on Information Theory, 53(11):3927-3943, 2007. doi:10.1109/TIT.2007.907471.

[2] Mihir Bellare, Alexandra Boldyreva, and Jessica Staddon. Randomness re-use in multi-recipient encryption schemes. In Y. Desmedt, editor, Public Key Cryptography (PKC 2003), volume 2567 of Lecture Notes in Computer Science, pages 85-99. Springer, 2003. doi:10.1007/3-540-36288-6_7.

[3] Ilaria Chillotti, Nicolas Gama, Mariya Georgieva, and Malika Izabachène. TFHE: Fast fully homomorphic encryption over the torus. Journal of Cryptology, 33(1):34-91, 2020. doi: 1 0.1 007/s00145-019-09319-x.

[4] Leo Ducas and Daniele Micciancio. FHEW: Bootstrapping homomorphic encryption in less than a second. In Elisabeth Oswald and Marc Fischlin, editors, Advances in Cryptology - EUROCRYPT 2015, Part I, volume 9056 of Lecture Notes in Computer Science, pages 617-640. Springer, 2015. https://doi.org/10.1007/978-3-662-46800-5_24 doi:10.1007/978-3-662-46800-5_24.

[5] Junfeng Fan and Frederik Vercauteren. Somewhat practical fully homomorphic encryption. Cryptology ePrint Archive, Report 2012/144, 2012. https://eprint.iacr.org/2012/144.

[6] Craig Gentry, Chris Peikert, and Vinod Vaikuntanathan. Trapdoors for hard lattices and new cryptographic constructions. In Richard E. Ladner and Cynthia Dwork, editors, 40th Annual ACM Symposium on Theory of Computing, pages 197-206. ACM Press, 2008. doi:10.1145/1374376.1374407.

[7] Shafi Goldwasser and Silvio Micali. Probabilistic encryption. Journal of Computer and System Sciences, 28(2):270-299, 1984. doi:10.1016/0022-0000(84)90070-9.

[8] Marc Joye. SoK: Fully homomorphic encryption over the [discretized] torus. IACR Transactions on Cryptographic Hardware and Embedded Systems, 2022(4):661-692, 2022. doi:10.46586/tches.v2022.i4.661-692.

[9] Vadim Lyubashevsky, Chris Peikert, and Oded Regev. On ideal lattices and learning with errors over rings. In. Henri Gilbert, editor, Advances in Cryptology - EUROCRYPT 2010, volume 6110 of Lecture Notes in Computer Science, pages 1-23. Springer, 2010. doi:10.1007/978-3-642-13190-5_1.

[10] Vadim Lyubashevsky, Chris Peikert, and Oded Regev. On ideal lattices and learning with errors over rings. Cryptology ePrint Archive, Report 2012/230, 2012. https://eprint.iacr.org/2012/230.

[11] Oded Regev. On lattices, learning with errors, random linear codes, and cryptography. Journal of the ACM, 56(6), Article 34, 2009. doi:10.1145/1568318.1568324.

[12] Ron Rothblum. Homomorphic encryption: From private-key to public-key. In Yuval Ishai, editor, TCC 2011: 8th Theory of Cryptography Conference, volume 6597 of Lecture Notes in Computer Science, pages 219-234. Springer, 2011. doi:10.1007/978-3-642-19571-6_14.

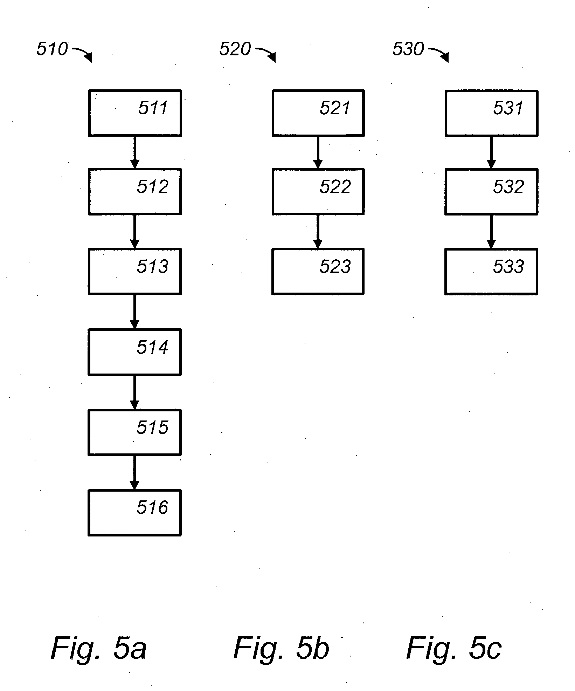

**Figure 5a** schematically shows an example of an embodiment of an encryption method 510 for encrypting a message ($m_1$) with a public key. Method 510 may be computer implemented and comprises

- obtaining (511) a public key (($A, B$)) corresponding to a public/private key pair,
- obtaining (512) a scalar ($m_1$) representing a plaintext message,
- computing (513) the public key encrypted message comprising a pair of a vector ($a$) and a scalar ($b$), the computing comprising
- generating (514) a bounded, random vector ($r$),
- computing (515) the vector ($a$), comprising applying the bivariate vector-valued function to the first vector ($A$) in the public key and the random vector ($r$), and adding a noise vector ($e_1$),
- computing (516) the scalar ($b$), comprising computing the inner product of the second vector ($B$) in the public key and the random vector ($r$), adding an encoding ( $\widetilde{m_1}$ ) of the plaintext message-for example, a multiple of a plaintext message scalar ($m_1$), and adding a noise scalar ($e_2$).

**Figure 5b** schematically shows an example of an embodiment of a key generation method 520. Method 520 may be computer implemented and comprises

- generating (521) a private key comprising a bounded, random vector ($s$),
- generating the public key comprising a pair of vectors (($A, B$), the generating comprising
- randomly (522) generating a first vector ($A$) in the pair of vectors,

- computing a (523) second vector ($B$) in the pair of vectors from the first vector and the private key ($s$), comprising applying a bivariate, vector-valued function ($A \circledast s$) to the first vector ($A$) and the private key ($s$), and adding a noise vector ($e$).

**Figure 5c** schematically shows an example of an embodiment of a decryption method 530 for decrypting a message with a private key. Method 530 may be computer implemented and comprises

- receiving (531) an encrypted message encrypted with a public key, the encrypted message comprising a vector ($a$) and a scalar ($b$), the encrypted message being encrypted with a method for encrypting a message with a public key as in an embodiment.
- obtaining (532) a private key ($s$) corresponding to the public key used for the encrypted message,
- computing (533) a decryption element by subtracting from the scalar ($b$) in the encrypted message the inner product of the vector in the encrypted message ($a$) and the private key, obtaining the plaintext message from a result of the subtraction. For example, the result may be rounded and decoded, or may be directly decoded. In the latter case, the rounding operation is implicit in the decoding.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started.

Embodiments of the method may be executed using software, which comprises instructions for causing a processor system to perform an embodiment of method 510, 520, and/or 530. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform an embodiment of the method.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

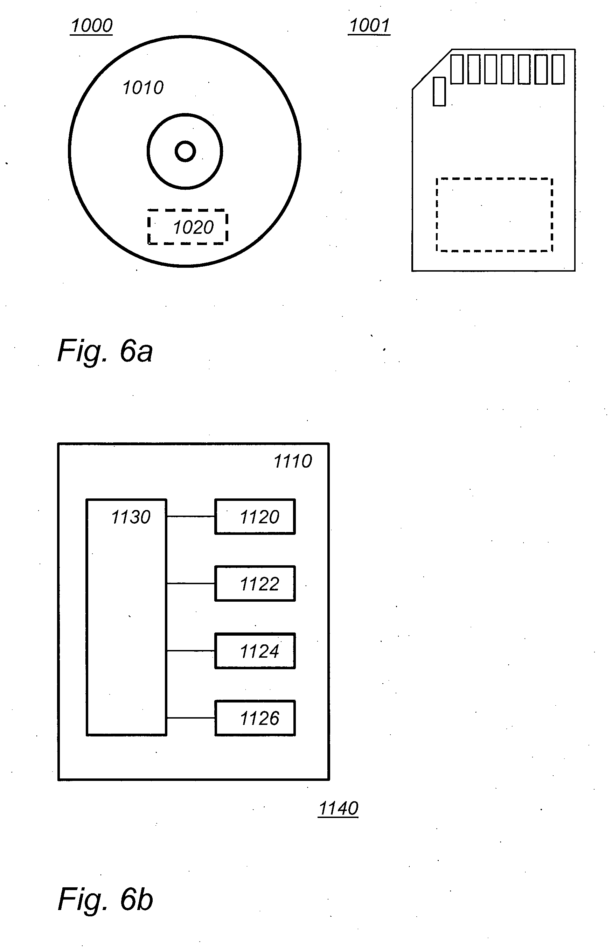

**Figure 6a** shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method for key generation, encryption and/or decryption, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said method for key generation, encryption and/or decryption.

**Figure 6b** shows in a schematic representation of a processor system 1140 according to an embodiment of a key generation device and/or encryption device and/or decryption device. The processor system comprises one or more integrated circuits 1110. The architecture of the one or more integrated circuits 1110 is schematically shown in Figure 6b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., the key generation device and/or encryption device and/or decryption device may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

While system 1140 is shown as including one of each described component, the various components may be duplicated in various embodiments. For example, the processing unit 1120 may include multiple microprocessors that are configured to independently execute the methods described herein or are configured to perform elements or subroutines of the methods described herein such that the multiple processors cooperate to achieve the functionality described herein. Further, where the system 1140 is implemented in a cloud computing system, the various hardware components may belong to separate physical systems. For example, the processor 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A method (510) for encrypting a message (m) with a public key, comprising

   - obtaining (511) a public key (($A, B$)) corresponding to a public/private key pair, the key pair being computable by a key pair generation method comprising

     - obtaining (521) a private key comprising a bounded, random vector ($s$),
     - generating the public key comprising a pair of vectors (($A, B$)), the generating comprising

       - randomly (522) generating a first vector ($A$) in the pair of vectors,
       - computing a (523) second vector ($B$) in the pair of vectors from the first vector and the private key ($s$), comprising applying a bivariate, vector-valued function ($A \circledast s$) to the first vector ($A$) and the private key ($s$),

   - obtaining (512) a scalar ($m$) representing a plaintext message,
   - computing (513) the public key encryption comprising a pair of a vector ($a$) and a scalar ($b$), the computing comprising

     - generating (514) a bounded, random vector ($r$),
     - computing (515) the vector ($a$), comprising applying the bivariate vector-valued function to the first vector ($A$) in the public key and the random vector ($r$),
     - computing (516) the scalar ($b$), comprising computing the inner product of the second vector ($B$) in the public key and the random vector ($r$), and adding an encoding ($\tilde{m}$) of the plaintext message scalar.

**2.** A method for encrypting as in Claim 1, wherein

- generating the public key comprises randomly generating a noise vector ($e$), and computing the second vector ($B$) comprises adding the noise vector ($e$) ($B = A \circledast s + e$), and/or
- computing the public key encryption comprises generating a first noise vector ($e_1$), and a second noise scalar ($e_2$), computing the vector ($a$) comprises adding the first noise vector ($e_1$) ($a = A \circledast r + e_1$), and computing the scalar ($b$) comprises adding the second noise scalar ($e_2$) ($b = \langle B,r \rangle + \tilde{m} + e_2$).

**3.** A method for encrypting as in any of the preceding claims, wherein a predefined index ($i$) of the output of the bivariate, vector-valued function applied to a first vector ($u$) and a second vector (v) equals the inner product of first vector ($u$) and a second vector ($v$) (($u \circledast v)_i = \langle u, v \rangle$)

**4.** A method for encrypting as in any one of the preceding claims, wherein the bivariate, vector-valued function ($\circledast$) is obtained from a convolution ($*$) and a univariate function ($\varphi_1$), the bivariate function for a first vector ($u$) and a second vector ($v$) being defined as the convolution applied to the first vector and a vector obtained from the univariate function applied to the second vector ($u \circledast v = u * \varphi_1(v)$).

**5.** A method for encrypting as in Claim 4, wherein the univariate function- is linear and defined by the predefined index and the convolution.

**6.** A method for encrypting as in Claims 4 or 5, wherein the convolution is derived from a quotient polynomial (p), wherein the convolution applied to a first vector and a second vector is obtained by mapping the first and second vector to a first polynomial and a second polynomial, multiplying the first and second polynomials, and reducing the so-obtained polynomial modulo the quotient polynomial ($p$), and mapping the result to a vector.

**7.** A method for encrypting as in Claim 6, wherein the quotient polynomial is $X^n + 1$.

**8.** A method of encrypting as in any of the preceding claims, wherein the bivariate, vector-valued function is defined for two vectors $u = (u_1, ..., u_n), v = (v_1, ..., v_n) \in \mathbb{Z}^n$ as the vector $w =$

$$u \circledast v = (u \circledast_1 v, ..., u \circledast_n v) \in \mathbb{Z}^n \text{ defined by } w_i = u \circledast_i v = \sum_{j=1}^{i} u_j\, v_{n+j-i} - \sum_{j=i+1}^{n} u_j\, v_{j-i}$$

**9.** A method of encryption as in any of the preceding claims for encrypting multiple messages ($m_k$) with a public key,

- obtaining multiple scalars ($m_k$) representing multiple plaintext messages,
- computing once the vector ($a$) of the public key encryption,
- applying the bivariate, vector-valued function ($B \circledast r$) to the second vector ($B$) and the random vector ($r$), wherein one component of the resulting vector is the inner product of the second vector ($B$) in the public key and the random vector ($r$),
- computing an encoding ($\tilde{m}_\ell$) for each of the multiple scalars ($m_\ell$)
- encrypting the multiple scalars comprises adding distinct components of the resulting vector to different ones of the encoded scalars ($b_\ell \leftarrow (B \circledast r)_{j\ell} + \tilde{m}_\ell + e_{2,\ell}$), wherein $e_{2,\ell}$ is a possible noise value.

**10.** A method of encrypting as in any of the preceding claims, wherein a bounded vector has bounded elements, wherein the elements

- are binary, or
- are ternary.

**11.** A method as in any one of the preceding claims, wherein

- the dimension of the vectors is a power of 2, or

- the dimension of the vectors is 2 times a power of 3, and/or
- the dimension of the vectors is $\phi(M)$ wherein $\phi$ denotes Euler's totient function for some integer $M$.

12. A method as in any one of the preceding claims, wherein the vector ($a$ and/or the scalar ($b$) in a public key encryption,

- are defined over the ring $\mathbb{Z}/q\mathbb{Z}$, the public encryption being an LWE ciphertext over $\mathbb{Z}/q\mathbb{Z}$, or
- are defined over the discretized torus $\mathbb{T}_q$, the public encryption being an LWE ciphertext over $\mathbb{T}_q$, or
- are defined over the real torus $\mathbb{T}$, the public encryption being an LWE ciphertext over $\mathbb{T}$.

13. A method of encrypting as in any of the preceding claims, wherein the bivariate, vector-valued function satisfies the constraint that decrypting an encrypted message provides the original message.

14. A method of encrypting as in any of the preceding claims, wherein

- the bivariate, vector-valued function is linear in both inputs.

15. A method of encrypting as in any of the preceding claims, wherein the first and second vector ($A$, $B$) in the public key have elements in the set of integers modulo a number $q$ ($\mathbb{Z}/q\mathbb{Z}$), the message scalar is chosen from the set of integers modulo a number $t$, with $q > t$, the encoding is multiplying the plaintext message scalar ($m$) times a rounding of $q/t$, or is rounding the multiplication of the plaintext message scalar ($m$) times $q/t$.

16. A homomorphic calculation method, comprising

- receiving an encrypted message, the encrypted message being obtained by encrypting a plaintext message with a public key according to an encryption method as in any of the preceding claims,
- performing a homomorphic calculation upon the encrypted input data at a server computer, obtaining a public-key encrypted output data.

17. A method (530) for decrypting with a private key a message encrypted with a public key as in any of the preceding claims, comprising

- receiving (531) an encrypted message encrypted with a public key, the encrypted message comprising a vector ($a$) and a scalar ($b$),
- obtaining (532) a private key ($s$) corresponding to the public key used for the encrypted message,
- computing (533) a decryption element by subtracting from the scalar ($b$) in the encrypted message the inner product of the vector in the encrypted message ($a$) and the private key, obtaining the plaintext message scalar from the result of the subtraction.

18. A method for decrypting with a private-key multiple messages encrypted with a public key as in any of Claims 9-15, comprising

- receiving an encrypted message encrypted with a public key, the encrypted messages comprising a vector ($a$) and multiple scalars ($b_\ell$),
- converting the vector ($a$) to multiple LWE-type ciphertexts (($\Psi_{j\ell}(a),b_\ell$)), comprising applying a converting map ($\Psi_{j\ell}$) to the vector,
- decrypting each LWE-type ciphertext as in Claim 17.

19. A system comprising: one or more processors; and one or more storage devices storing instructions that, when executed by the one or more processors, cause the one or more processors to perform operations for a method according to any of the preceding claims.

20. A non-transitory computer storage medium encoded with instructions that, when executed by one or more computers, cause the one or more computers to perform operations according to any of Claims 1-18.

100

| 110 | | 120 | | 130 |
|---|---|---|---|---|
| 111 | | 121 | | 131 |
| 112 | | 122 | | 132 |
| 113 | | 123 | | 133 |

| 140 |
|---|
| 141 |
| 142 |
| 143 |

## Fig. 1a

102

110'

172

120.1

120.2

140

## Fig. 1b

Fig. 1c

210

211    221

212    281

282

280

Fig. 2a

210'

212.1    281

221    212.2    282

Fig. 2b

Fig. 3a

Fig. 3b

230 ⌐

```
┌────────┐
│  260   │
└────────┘
┌────────┐        ┌──────────┐        ┌────────┐
│  221   │────────│   214    │────────│  241   │
└────────┘        └──────────┘        └────────┘
```

# Fig. 4a

230' ⌐

```
┌────────┐
│  261   │
└────────┘
┌────────┐        ┌──────────┐        ┌────────┐
│  221   │────────│  214.1   │────────│  271   │
└────────┘        └──────────┘        └────────┘
                                           │
        ┌────────┐    ┌──────────┐    ┌────────┐
        │  262   │────│  214.2   │────│  241   │
        └────────┘    └──────────┘    └────────┘
```

# Fig. 4b

510

511

512

513

514

515

516

*Fig. 5a*

520

521

522

523

*Fig. 5b*

530

531

532

533

*Fig. 5c*

1000

1010

1020

1001

## Fig. 6a

1110

1130

1120

1122

1124

1126

1140

## Fig. 6b

Europäisches
Patentamt

European
Patent Office

Office européen
des brevets

# EUROPEAN SEARCH REPORT

Application Number

EP 23 31 5083

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIANHUI LU ET AL: "LAC: Practical Ring-LWE Based Public-Key Encryption with Byte-Level Modulus", IACR, INTERNATIONAL ASSOCIATION FOR CRYPTOLOGIC RESEARCH , vol. 20181024:003214 23 October 2018 (2018-10-23), pages 1-27, XP061026574, Retrieved from the Internet: URL:http://eprint.iacr.org/2018/1009.pdf [retrieved on 2018-10-23] * page 6 - page 9 * ----- | 1-20 | INV. H04L9/30 H04L9/00 |
| X | BRAKERSKI ZVIKA ET AL: "Fully Homomorphic Encryption from Ring-LWE and Security for Key Dependent Messages", ADVANCES IN CRYPTOLOGY - CRYPTO 2011 : 31TH ANNUAL CRYPTOLOGY CONFERENCE, SANTA BARBARA, CA, USA, AUGUST 14-18, 2011 ; PROCEEDINGS; [LECTURE NOTES IN COMPUTER SCIENCE , ISSN 0302-9743], SPRINGER, HEIDELBERG [U.A.], vol. 6841, 14 August 2011 (2011-08-14), pages 505-524, XP047309768, DOI: 10.1007/978-3-642-22792-9_29 ISBN: 9783642227912 * page 509 - page 513 * * page 518 - page 521 * ----- | 1-20 | |

TECHNICAL FIELDS
SEARCHED     (IPC)

H04L

-/--

The present search report has been drawn up for all claims

| Place of search | Date of completion of the search | Examiner |
|---|---|---|
| Munich | 22 September 2023 | Apostolescu, Radu |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## EUROPEAN SEARCH REPORT

Application Number

EP 23 31 5083

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALBERTO PEDROUZO-ULLOA ET AL: "Revisiting Multivariate Ring Learning with Errors and its Applications on Lattice-based Cryptography", IACR, INTERNATIONAL ASSOCIATION FOR CRYPTOLOGIC RESEARCH , vol. 20210421:103010 21 April 2021 (2021-04-21), pages 1-36, XP061059039, Retrieved from the Internet: URL:https://eprint.iacr.org/2019/1109.pdf [retrieved on 2021-04-21] * page 2 - page 9 * * page 15 - page 26 * ----- | 1-20 | |
| A | ANDREJ BOGDANOV ET AL: "Public-Key Encryption from Continuous LWE", IACR, INTERNATIONAL ASSOCIATION FOR CRYPTOLOGIC RESEARCH , vol. 20220131:074235 25 January 2022 (2022-01-25), pages 1-35, XP061070123, Retrieved from the Internet: URL:https://eprint.iacr.org/2022/093.pdf [retrieved on 2022-01-25] * page 5 - page 7 * * page 11 - page 15 * * page 21 * ----- -/-- | 1-20 | TECHNICAL FIELDS SEARCHED (IPC) |

The present search report has been drawn up for all claims

| Place of search | Date of completion of the search | Examiner |
|---|---|---|
| Munich | 22 September 2023 | Apostolescu, Radu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EUROPEAN SEARCH REPORT

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ILARIA CHILLOTTI ET AL: "Programmable Bootstrapping Enables Efficient Homomorphic Inference of Deep Neural Networks", IACR, INTERNATIONAL ASSOCIATION FOR CRYPTOLOGIC RESEARCH , vol. 20210127:133406 25 January 2021 (2021-01-25), pages 1-18, XP061051918, Retrieved from the Internet: URL:https://eprint.iacr.org/2021/091.pdf [retrieved on 2021-01-25] * page 2 – page 5 * * page 13 – page 14 * ----- | 1-20 | |

TECHNICAL FIELDS
SEARCHED     (IPC)

The present search report has been drawn up for all claims

| Place of search | Date of completion of the search | Examiner |
|---|---|---|
| Munich | 22 September 2023 | Apostolescu, Radu |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 3 of 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Programmable bootstrapping enables efficient homomorphic inference of deep neural networks'', Cyber Security Cryptography and Machine Learning (CSCML 2021). **I. CHILLOTTI et al.** Lecture Notes in Computer Science. Springer, 2021, vol. 12716, 1-19
- **MIHIR BELLARE ; ALEXANDRA BOLDYREVA ; KAORU KUROSAWA ; JESSICA STADDON.** Multi-recipient encryption schemes: How to save on bandwidth and computation without sacrificing security. *IEEE Transactions on Information Theory,* 2007, vol. 53 (11), 3927-3943
- Randomness re-use in multi-recipient encryption schemes. **MIHIR BELLARE ; ALEXANDRA BOLDYREVA ; JESSICA STADDON.** Lecture Notes in Computer Science. Springer, 2003, vol. 2567, 85-99
- **LLARIA CHILLOTTI ; NICOLAS GAMA ; MARIYA GEORGIEVA ; MALIKA IZABACHÈNE.** TFHE: Fast fully homomorphic encryption over the torus. *Journal of Cryptology,* 2020, vol. 33 (1), 34-91
- FHEW: Bootstrapping homomorphic encryption in less than a second. **LEO DUCAS ; DANIELE MICCIANCIO.** Advances in Cryptology - EUROCRYPT 2015. Springer, 2015, vol. 9056, 617-640
- **JUNFENG FAN ; FREDERIK VERCAUTEREN.** Somewhat practical fully homomorphic encryption. *Cryptology,* 2012, https://eprint.iacr.org/2012/144
- Trapdoors for hard lattices and new cryptographic constructions. **CRAIG GENTRY ; CHRIS PEIKERT ; VINOD VAIKUNTANATHAN.** 40th Annual ACM Symposium on Theory of Computing. ACM Press, 2008, 197-206
- **SHAFI GOLDWASSER ; SILVIO MICALI.** Probabilistic encryption. *Journal of Computer and System Sciences,* 1984, vol. 28 (2), 270-299
- **MARC JOYE ; SOK.** Fully homomorphic encryption over the [discretized] torus. *IACR Transactions on Cryptographic Hardware and Embedded Systems,* 2022, vol. 2022 (4), 661-692
- On ideal lattices and learning with errors over rings. **VADIM LYUBASHEVSKY ; CHRIS PEIKERT ; ODED REGEV.** Advances in Cryptology - EUROCRYPT 2010. Springer, 2010, vol. 6110, 1-23
- **VADIM LYUBASHEVSKY ; CHRIS PEIKERT ; ODED REGEV.** On ideal lattices and learning with errors over rings. *Cryptology,* 2012, https://eprint.iacr.org/2012/230
- **ODED REGEV.** On lattices, learning with errors, random linear codes, and cryptography. *Journal of the ACM,* 2009, vol. 56 (6
- Homomorphic encryption: From private-key to public-key. **RON ROTHBLUM.** TCC 2011: 8th Theory of Cryptography Conference. Springer, 2011, vol. 6597, 219-234